# EUROPEAN PATENT SPECIFICATION

(11) **EP 1 669 398 B1**
(45) Date of publication and mention of the grant of the patent: **08.01.2014**
(21) Application number: 04719613.4
(22) Date of filing: 11.03.2004
(51) Int. Cl.: C09K 21/12, C09K 21/14, C07F 9/6571, C08F 8/40, C08G 69/48, C08G 59/14, C08G 63/91

(54) **FLAME-RETARDANT PROCESSED RESIN OBTAINED WITH A REACTIVE FLAME RETARDANT**
EIN MIT EINEM REAKTIVEN FLAMMSCHUTZMITTEL ERHALTENES FLAMMWIDRIGES VERARBEITETES HARZ
RESINE IGNIFUGEE OBTENUE A PARTIR D' UN IGNIFUGEANT REACTIF

(30) Priority: 10.09.2003 JP 2003317632; 10.09.2003 JP 2003317633
(43) Date of publication of application: 14.06.2006
(73) Proprietor: Fuji Electric Co., Ltd., Kawasaki-shi Kanagawa 210-0856 (JP)
(72) Inventor: KANNO,T., Fuji Electric Advanced Technology Co.Ltd, Yokosuka-shi, Kanagawa 240-0194 (JP); ONITSUKA,A, Fuji Electric Advanced TechnologyCoLtd, Yokosuka-shi, Kanagawa 240-0194 (JP); YANASE,H., Fuji Electric Advanced Technology CoLtd, Yokosuka-shi, Kanagawa 240-0194 (JP); SHIGEHARA, Kiyotaka, Suginami-ku, Tokyo 166-0003 (JP); NOMURA, Tomohiro, Toho Chemical Industry Co., Ltd, Yokosuka-shi, Kanagawa 237-0062 (JP)
(74) Representative: Beacham, Annabel Rose
(86) International application number: PCT/JP2004/003191
(87) International publication number: WO 2005/026251

(56) References cited:
- JP-A- 2001 089 489
- JP-A- 2001 302 686
- JP-A- 2001 323 268
- JP-A- 2001 323 268
- JP-A- 2001 328 994
- JP-A- 2001 328 994
- JP-A- 2002 006 487
- JP-A- 2003 165 911
- JP-A- 2004 091 679
- LU S Y ET AL: "Recent developments in the chemistry of halogen-free flame retardant polymers" 1 October 2002 (2002-10-01), PROGRESS IN POLYMER SCIENCE, PERGAMON PRESS, OXFORD, GB, PAGE(S) 1661 - 1712 , XP025991818 ISSN: 0079-6700 [retrieved on 2002-10-01] * paragraphs 1.1 and 2.1.1 ; Figure 3 on page 1668 * * the whole document *

## Description

### TECHNICAL FIELD

The present invention relates to a product made of flame-retarded resin. More specifically, the present invention relates to products comprising a non-halogen-based flame retardant containing no halogen.

### BACKGROUND ART

Thermoplastic resins such as polyester and polyamide, and thermosetting resins such as epoxy each have excellent moldability, excellent mechanical strength, and excellent electrical characteristics for a general-purpose resin and an engineering plastic, so they have been used in various fields including the fields of electricity and electronics. In addition, products such as those obtained by molding those resins are requested to be flame retardant in terms of safety for the purpose of preventing a fire at a high temperature. For example, the standards such as UL94 have been provided as flame retardancy grades.

It is generally known that the addition of a halogen substance is particularly effective in imparting flame retardancy to such resin material. In view of this, a halogen substance is added to a resin before use. The mechanism of the halogen-based flame retardant is considered to be as follows. A halogenated radical is generated mainly by heat decomposition, and the halogenated radical captures an organic radical serving as a burning source, so a chain reaction of combustion is stopped and high flame retardancy is exerted.

However, a flame retardant containing a large amount of halogen compound may generate dioxin and the like depending on combustion conditions, so there has been a growing demand for reducing the amount of halogen in recent years from the viewpoint of reducing a load to the environment. Therefore, various kinds of non-halogen-based flame retardants each containing no halogen-based compound have been examined.

Inorganic flame retardants such as a metal hydrate and red phosphorus, organophosphorus-based flame retardants such as a phosphoric ester, and the like have been examined as such non-halogen-based flame retardants. However, a metal hydrate such as aluminum hydroxide or magnesium hydroxide does not have a very high flame retardancy imparting effect, so a resin must be blended with a large amount of the metal hydrate. Therefore, the moldability of a resin is apt to deteriorate and the mechanical strength of a molded product to be obtained or the like is apt to reduce, thereby causing a problem in that applications of a usable molded product or the like are limited. In addition, red phosphorus is apt to inhibit electrical characteristics owing to insufficient dispersion, to generate a dangerous gas, to reduce moldability, and to cause bleeding, although it has a high flame retardancy effect.

On the other hand, for example, JP-A-2002-20394 discloses that a piperazine salt or alkylenediamine salt having 1 to 6 carbon atoms of an acidic phosphoric ester having a phosphorinane structure is used as a phosphorus-based flame retardant such as a phosphoric ester.

In addition, JP-A-2002-80633 discloses a flame retardant for a resin mainly composed of a salt composed of an aromatic phosphoric ester such as monophenyl phosphate or monotolyl phosphate and an aliphatic amine such as piperazine.

Furthermore, JP-A-2002-138096 discloses that a phosphorus-containing phenol compound is used as a flame retardant for providing a flame-retardant epoxy resin which exerts an excellent flame retardancy effect as a halogen-free flame-retardant prescription and which is excellent in physical properties, such as heat resistance and water resistance, of a molded product, and in adhesiveness in application for an electrical laminated plate.

Furthermore, JP-A-05-331179 discloses an organic cyclic phosphorus compound having a bifunctional hydroxyl group particularly useful as a stabilizer for a polymer compound or as a flame retardant.

However, phosphoric ester compounds used in JP-A-2002-20394, JP-A-2002-80633, and JP-A-2002-138096 described above must be blended at high concentrations because of their insufficient flame retardancy.

In addition, none of the compounds has a reactive group in a molecule for reacting with a resin component, so a flame retardant component is apt to migrate in a resin, thereby causing a problem in that the flame retardant component volatilizes at the time of molding to contaminate a die, or a flame retardant bleeds out to the surface of the resin. The problem is responsible for reductions in, for example, thermal, mechanical, and electrical characteristics of a product made of the resin.

An organic cyclic phosphorus compound described in JP-A-05-331179 functions as a reactive flame retardant in a resin having a reactive group capable of binding to a hydroxyl group such as an epoxy resin. However, crosslinkage cannot be formed in a resin having no reactive group capable of binding to a hydroxyl group such as a typical olefin resin. In this case as well, a flame retardant component is apt to migrate in a resin, thereby causing a problem in that the flame retardant component volatilizes at the time of molding to contaminate a die or a flame retardant bleeds out to the surface of the resin.

JP-A-2001-89489 discloses phosphorus-based flame retardants which are stated to have low levels of bleeding when compounded in a resin.

Therefore, an object of the present invention is to provide: a reactive flame retardant which is excellent in flame retardancy and heat resistance when added to a resin in a small amount, can be prevented from bleeding out or the like, and is excellent in the mechanical characteristics, electrical characteristics, dimensional stability, and moldability of a molded product; and a product made of flame-retarded resin obtained with the same.

### DISCLOSURE OF THE INVENTION

That is, according to one aspect of the present invention, there is provided a product made of flame-retarded resin obtained by solidifying a resin composition which contains a reactive flame retardant comprising an organic cyclic phosphorus compound having two or more unsaturated groups at an end thereof and represented by the following general formula (I) or (II) and a resin and then reacting the resin with the reactive flame retardant by heating or irradiation with a radiation, the product made of flame-retarded resin being characterized in that the resin is a thermoplastic resin, and the product comprises 1 to 20 mass% of the reactive flame retardant with respect to an entirety of the product made of flame-retarded resin; 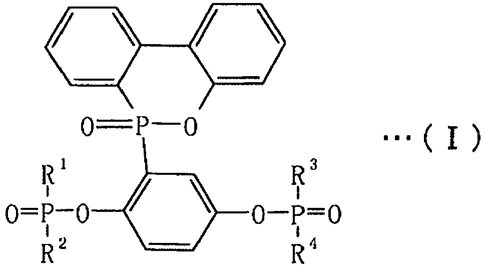 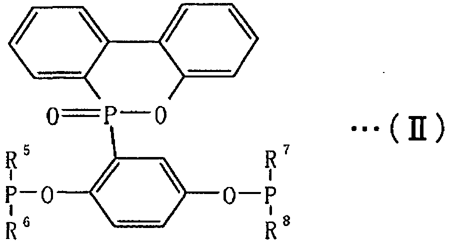 where, in the formula (I) or (II), R¹ to R⁴ and R⁵ to R⁸ are each selected from -NHCH₂CH=CH₂, -N(CH₂CH=CH₂)₂, -OCH₂CH=CH₂, -CH₂CH=CH₂, -CH₂CH₂OCH=CH₂, -(C₆H₄)-CH=CH₂, -O(C₆H₄)-CH=CH₂, -CH₂(C₆H₄)-CH=CH₂, -NH(C₆H₄)-CH=CH₂, -N(CH₂CH=CH₂)-(C₆H₄)-CH=CH₂, -O-R-OOC-C(R')=CH₂, -NH-R-NHCO-C(R')=CH₂, and an aryl group having 12 or less carbon atoms; R represents an alkylene group having 2 to 5 carbon atoms; and R'represents hydrogen or a methyl group; and at least two of R¹ to R⁴ and at least two of R⁵ to R⁸ each include a -CH=CH₂ group or a -C(CH₃)=CH₂ group.

According to the present invention, an organic cyclic phosphorus compound having two or more unsaturated bonds at the end thereof in one molecule is used, so a reaction in which the unsaturated bond at the end binds to a resin by means of heat or a radiation for a reaction can be performed. Thus, since a component of flame retardant can be stably present in the resin, the flame retardant can be prevented from bleeding out and flame retardancy can be imparted for a long time period even when the flame retardant is added in a small amount.

Further, the reactive flame retardant contains three phosphorus atoms in one molecule, so its phosphorus content is high. In addition, the reactive flame retardant contains a P-C bond that easily dissociates, so it easily generates a P radical having a high flame retardancy effect. Therefore, flame retardancy can be improved.

In addition, since the reactive flame retardant contains multiple benzene rings, the molecular weight increases and the reactive flame retardant becomes stable in terms of energy. The heat decomposition temperature increases owing to the foregoing, so the evaporation of the flame retardant at the time of kneading with a resin or molding as well as the decomposition of the flame retardant due to heat or shear at the time of molding can be prevented, thereby moldability is improved. In addition, since the reactive flame retardant contains a large amount of carbon, a so-called char effect is obtained, in which flame retardancy is improved through the generation and deposition of soot at the time of decomposition of a resin.

According to the product made of flame-retarded resin of the present invention, since the unsaturated bond at the end of the organic cyclic phosphorus compound is caused to react with the resin by heating or irradiation with a radiation, a component of flame retardant is stably present in the resin. As a result, the flame retardant can be prevented from bleeding out and a flame retardancy effect can be improved. Therefore, flame retardancy can be imparted for a long time period even when the amount of the reactive flame retardant to be added is as small as 1 to 20 mass% with respect to the entirety of the product made of flame-retarded resin.

In addition, through bonding between the flame retardant and the resin, the resin crosslinks to provide a three-dimensional network structure. Therefore, a resin can be molded, so that the resin product obtained can be excellent in all of chemical stability, heat resistance, mechanical characteristics, electrical characteristics, dimensional stability, flame retardancy, and moldability can be obtained. In particular, heat resistance and mechanical strength can be improved. Furthermore, the resin can be molded into a thin shape.

In further aspect of the product made of flame-retarded resin, the resin composition preferably contains two or more kinds of the organic cyclic phosphorus compound reactive flame retardants.

According to this aspect, since the reaction rate accompanied by crosslinking can be in control through combinational use of flame retardants different from each other in reactivity, the contraction, and the like of the resin due to the abrupt advancement of a crosslinking reaction can be prevented. In addition, the incorporation of a multifunctional flame retardant results in the formation of a uniform three-dimensional network structure with the organic cyclic phosphorus compound, so heat resistance and flame retardancy are improved and more stable physical properties of resin are obtained.

In further aspect of the product made of flame-retarded resin, the resin composition preferably further contains a flame retardant other than the aforementioned reactive flame retardant, and the flame retardant other than the aforementioned reactive flame retardant is preferably a cyclic nitrogen-containing compoundhaving at least one unsaturated group at an end thereof.

According to this aspect, with the cyclic nitrogen-containing compound having at least one unsaturated group at the end thereof, bonding between the flame retardant and the resin causes the resin to crosslink to provide a three-dimensional network structure as well. Therefore, while the entire cost of the flame retardants can be reduced owing to the combined use of the flame retardants, a resin can be molded, so that the resin product obtained can be excellent in all of chemical stability, heat resistance, mechanical characteristics, electrical characteristics, dimensional stability, flame retardancy, and moldability can be obtained. In addition, the incorporation of nitrogen additionally improves compatibility with the resin particularly in the case where a polyamide-based resin is used as the resin.

In further aspect of the product made of flame-retarded resin, the resin composition preferably further contains a flame retardant other than the aforementioned reactive flame retardant, and the flame retardant other than the aforementioned reactive flame retardant is preferably an additive-type flame retardant having no reactivity. The combined use of the reactive flame retardant with an additive-type flame retardant having no reactivity such as a phosphoric ester-based, melamine-based, metal hydroxide, or silicon-based flame retardant can additionally improve flame retardancy owing to a synergistic effect as compared to that in the case where the reactive flame retardant is used alone, and can reduce the cost of the flame retardant.

In further aspect of the product made of flame-retarded resin, the resin composition preferably further contains a crosslinking agent having no flame retardancy but having reactivity with the resin, and the crosslinking agent is preferably a multifunctional monomer or oligomer having an unsaturated group at an end of main skeleton thereof.

According to this aspect as well, bonding between the crosslinking agent and the resin causes the resin to crosslink to provide a three-dimensional network structure. Therefore, a resin can be molded, so that the resin product obtained can be excellent in all of chemical stability, heat resistance, mechanical characteristics, electrical characteristics, dimensional stability, flame retardancy, and moldability can be obtained.

In further aspect of the product made of flame-retarded resin, the product made of flame-retarded resin preferably contains 1 to 35 mass% of an inorganic filler with respect to the entirety of the product made of flame-retarded resin. In particular, the product made of flame-retarded resin preferably contains, as the inorganic filler, 1 to 10 mass% of a laminar clay composed of laminating silicate layers with respect to the entirety of the product made of flame-retarded resin. According to this aspect, a resin product, the contraction and decomposition thereof due to crosslinking being suppressed, which is excellent in dimensional stability, can be obtained. In addition, when laminar clay obtained by laminating silicate layers is incorporated as the inorganic filler, the laminar clay is dispersed into the resin in a nano order to form a hybrid structure with the resin. This leads to an improvement in the heat resistance, mechanical strength, and the like, of the product made of flame-retarded resin to be obtained.

In further aspect of the product made of flame-retarded resin, the product made of flame-retarded resin preferably contains 5 to 40 mass% of reinforced fibers with respect to the entirety of the product made of flame-retarded resin. According to this aspect, the incorporation of the reinforced fibers can improve the mechanical strength of the resin product such as tensile strength, compressive strength, bending strength, or impact strength. Furthermore, it can prevent reductions in physical properties due to moisture and temperature.

In further aspect of the product made of flame-retarded resin, the product made of flame-retarded resin is preferably obtained by a reaction between the resin and the reactive flame retardant through irradiation with an electron beam or γ ray at a dose of 10 kGy or more. According to this aspect, after having been solidified by molding or the like, the resin can be crosslinked by a radiation, so a resin product can be produced with high productivity. In addition, at a dose in the above range, uneven formation of a three-dimensional network structure due to an insufficient dose can be prevented as well as bleeding out due to the remaining of an unreacted crosslinking agent. In particular, at an irradiation dose of 10 to 45 kGy, deformation due to the internal strain of the resin product, contraction, and the like, resulting from an oxidation decomposition product generated by an excessive dose, can be prevented as well.

In further aspect of the product made of flame-retarded resin, the product made of flame-retarded resin is also preferably obtained by a reaction between the resin and the reactive flame retardant at a temperature higher than a temperature at which the resin composition is molded by 5°C or higher. According to this aspect, a radiation irradiator or the like is not needed. In particular the product made of flame-retarded resin can be suitably used for a resin composition containing a thermosetting resin.

In further aspect of the product made of flame-retarded resin, the product made of flame-retarded resin is preferably one selected from a molded product, a coating film, and a sealing compound. As described above, the product made of flame-retarded resin of the present invention has excellent flame retardancy and can be prevented from bleeding out. Therefore, in addition to the use as a typical resin molded product, it can be formed into a coating film as a coating agent or the like or can be suitably used as a sealing compound for a semiconductor, a liquid crystal material, or the like.

In further aspect of the product made of flame-retarded resin, the product made of flame-retarded resin is preferably used as an electrical component or an electronic component. As described above, the product made of flame-retarded resin of the present invention is excellent in all of heat resistance, mechanical characteristics, electrical characteristics, dimensional stability, flame retardancy, and moldability, so it can be particularly suitably used as an electrical component or an electronic component in which the above physical properties are particularly stringently demanded.

### BEST MODE FOR CARRYING OUT THE INVENTION

Hereinafter, the present invention will be described in detail. At first, the reactive flame retardant used in the present invention will be described.

The reactive flame retardant used in the present invention is a reactive flame retardant that has reactivity with a resin and binds with the resin by virtue of the reactivity to impart flame retardancy, the reactive flame retardant being characterized by comprising an organic cyclic phosphorus compound having two or more unsaturated groups at an end thereof and represented by the following general formula (I) or (II). 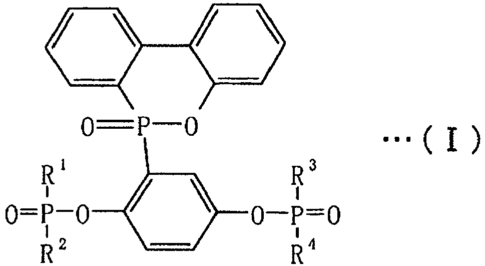 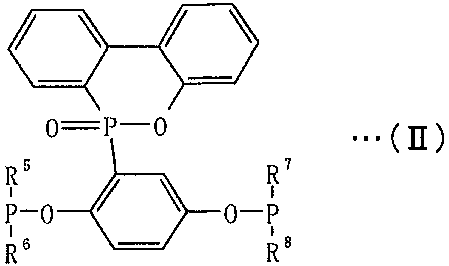 (In the formula (I) or (II), R¹ to R⁴ and R⁵ to R⁸ are each selected from -NHCH₂CH=CH₂, -N(CH₂CH=CH₂)₂, -OCH₂CH=CH₂, -CH₂CH=CH₂, -CH₂CH₂OCH=CH₂, -(C₆H₄) -CH=CH₂, -O(C₆H₄)-CH=CH₂, -CH₂(C₆H₄) -CH=CH₂, -NH(C₆H₄)-CH=CH₂, -N(CH₂CH=CH₂)-(C₆H₄)-CH=CH₂, -O-R-OOC-C(R')=CH₂, -NH-R-NHCO-C(R')=CH₂, and an aryl group having 12 or less carbon atoms. R represents an alkylene group having 2 to 5 carbon atoms, and R' represents hydrogen or a methyl group. At least two of R¹ to R⁴ and at least two of R⁵ to R⁸ each include a -CH=CH₂ group or a -C(CH₃)=CH₂ group.)

That is, the above organic cyclic phosphorus compound has at least two -CH=CH₂ groups and/or -C(CH₃)=CH₂ groups as an unsaturated bond at an end thereof. Here, a -CH=CH₂ group or a -C(CH₃)=CH₂ group is a functional group to be bound to a resin by heating or irradiation with a radiation or the like to be described later. The compound preferably has in one molecule two or more -CH=CH₂ groups, or two or more -C(CH₃)=CH₂ groups.

Examples of the aryl group having 12 or less carbon atoms include -C₆H₅ (a phenyl group), -C₆H₅OH (a hydroxyphenyl group), -C₆H₅-C₆H₅OH (a hydroxybiphenyl group), -α-C₁₀H₇ (an α-naphthyl group), and -β-C₁₀H₇ (a β-naphthyl group).

In addition, a phosphorus content in one molecule in the general formula (I) or (II) is preferably 8 to 19 wt%.

Specific examples of the organic cyclic phosphorus compound represented by the general formula (I) include compounds represented by the following structural formulae (I-1) to (I-18).

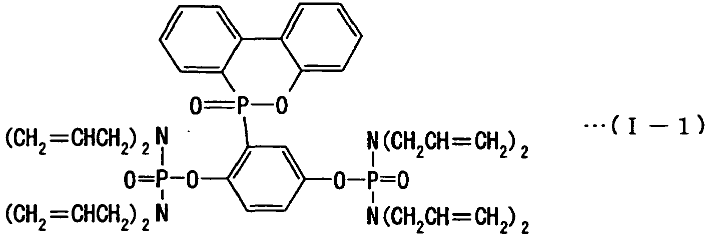

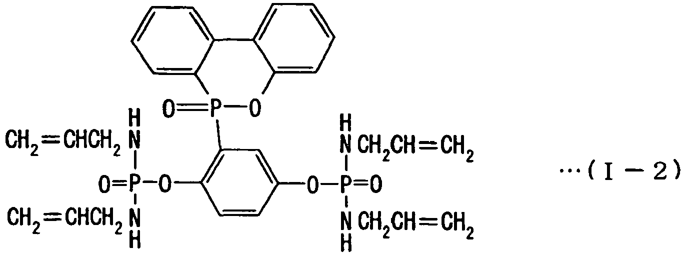

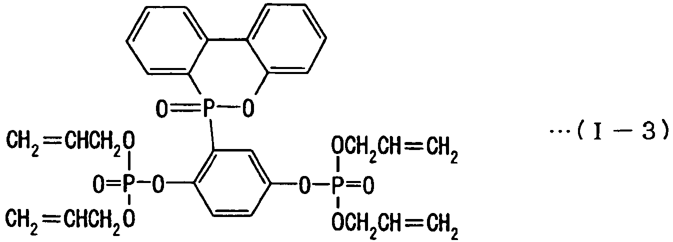

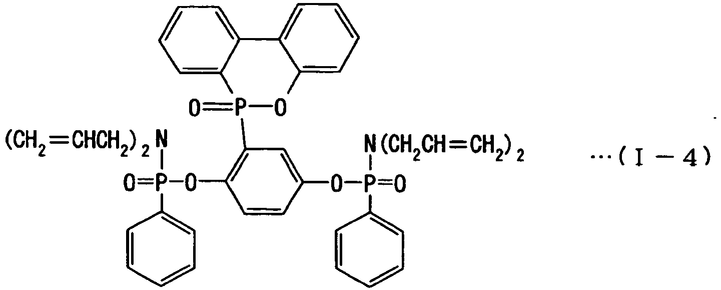

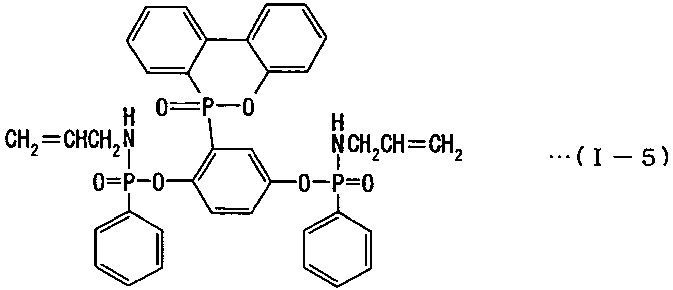

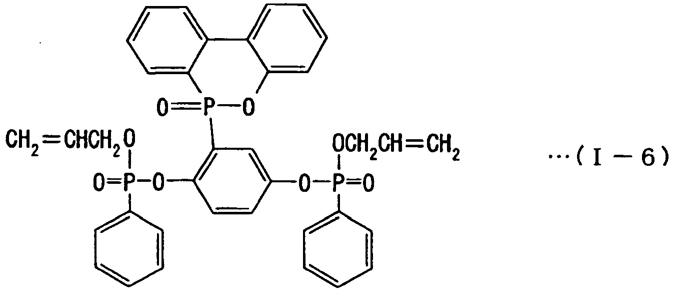

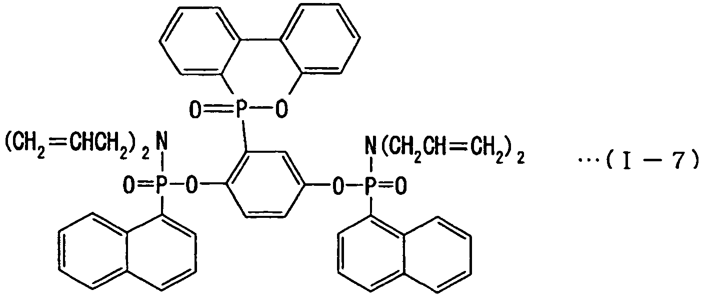

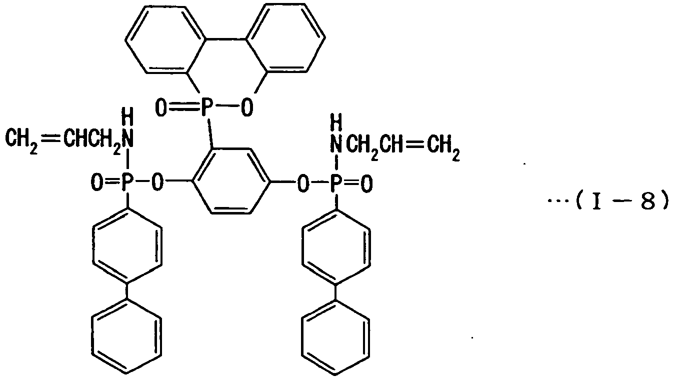

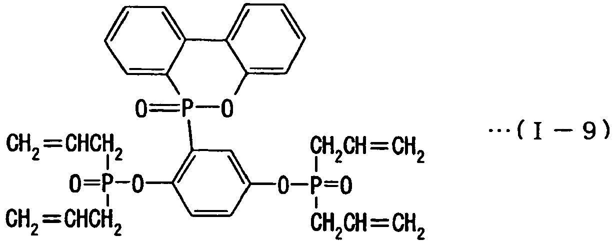

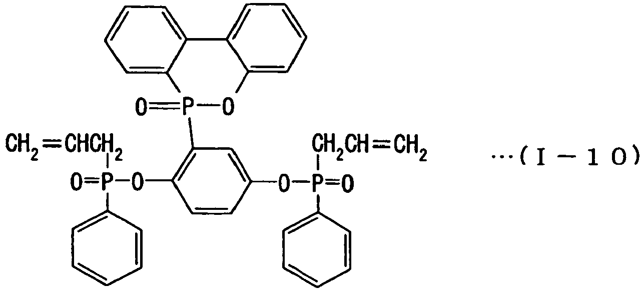

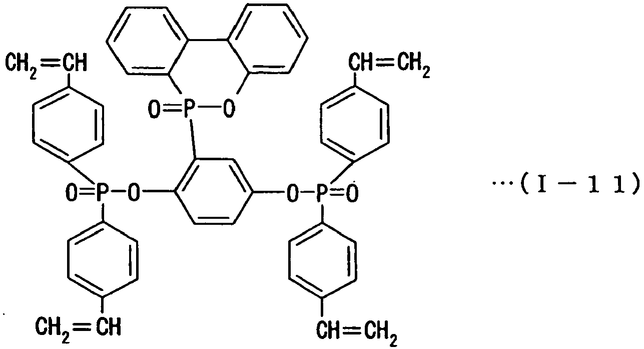

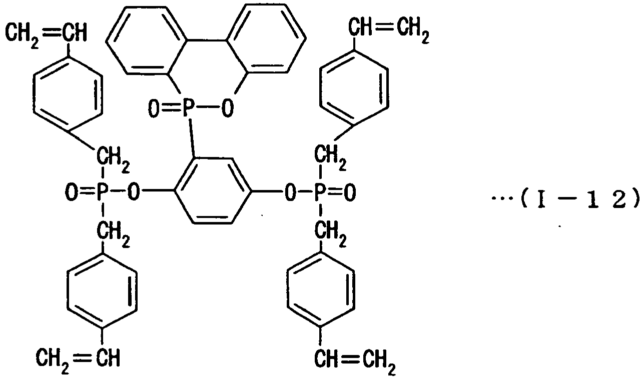

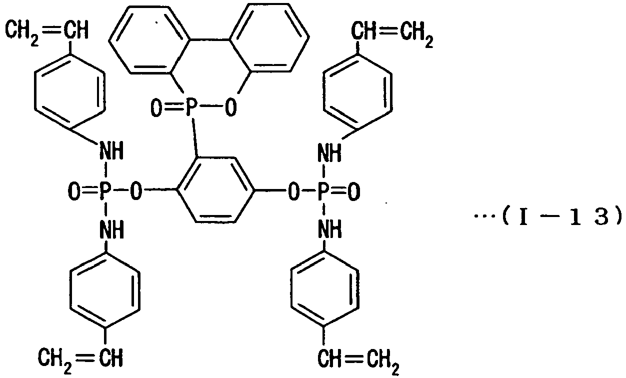

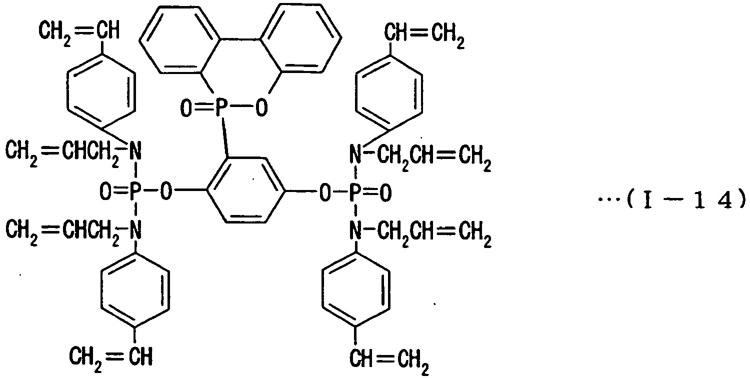

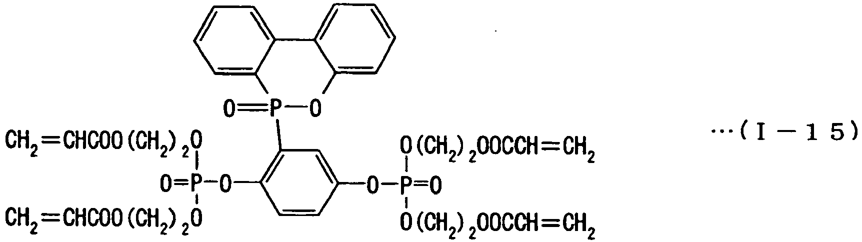

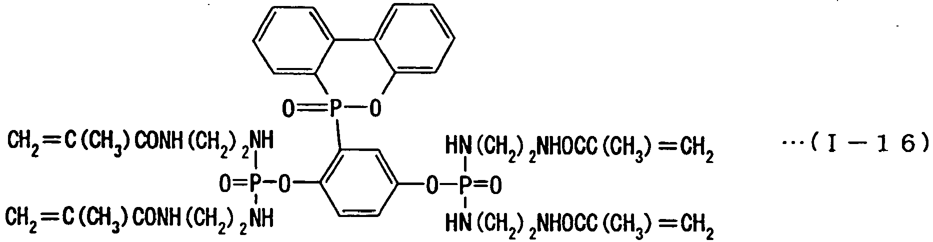

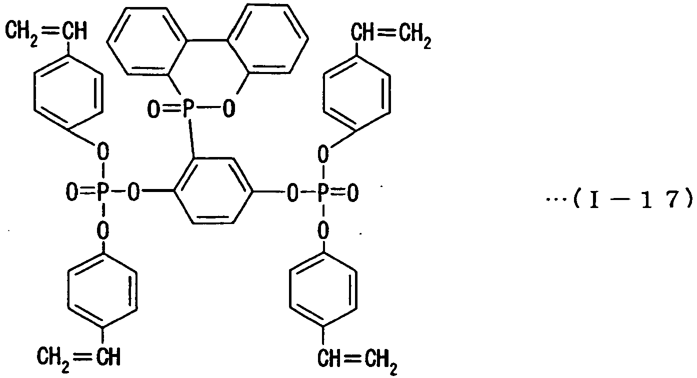

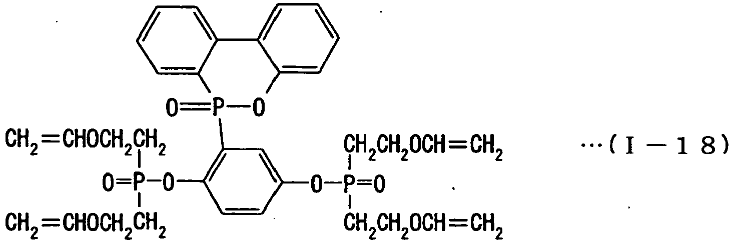

Specific examples of the organic cyclic phosphorus compound represented by the general formula (II) include compounds represented by the following structural formulae (II-1) to (II-18).

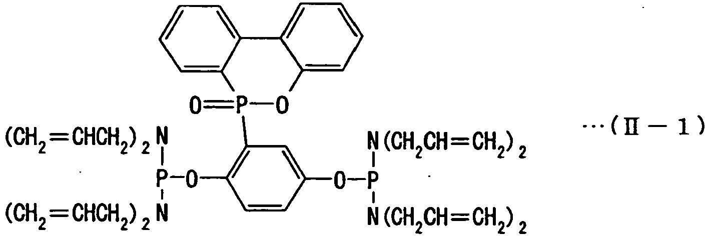

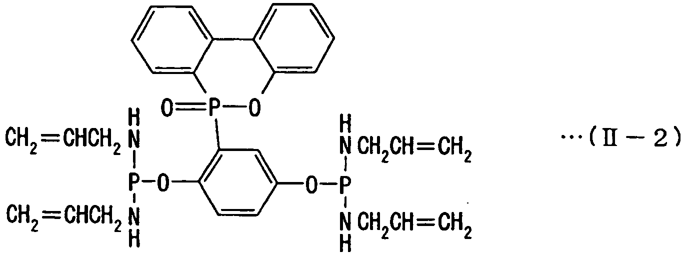

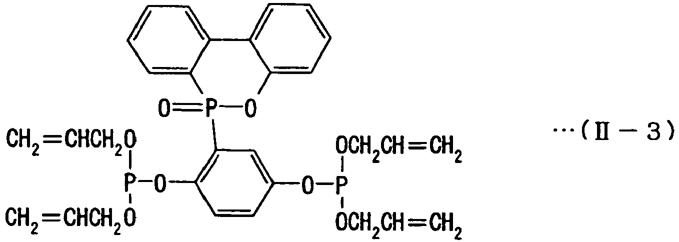

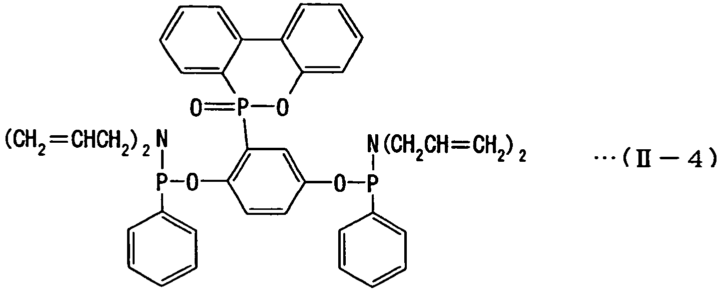

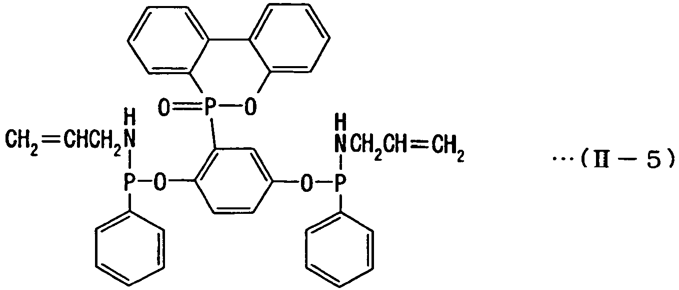

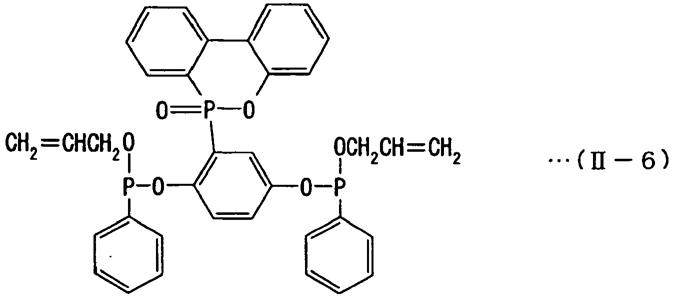

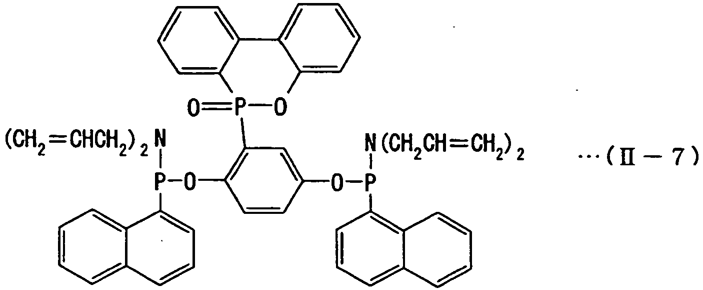

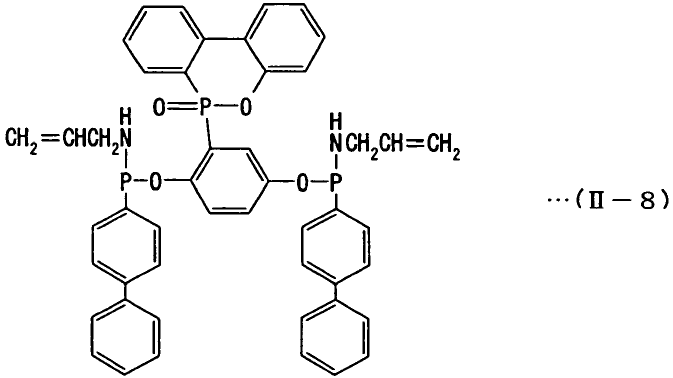

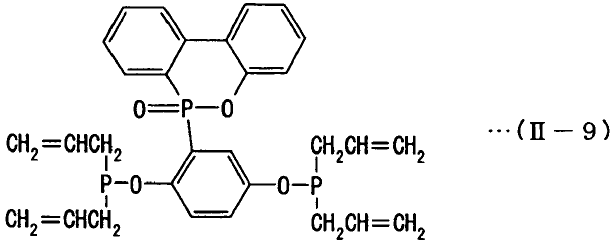

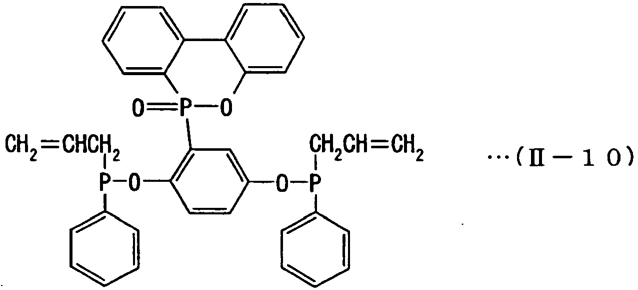

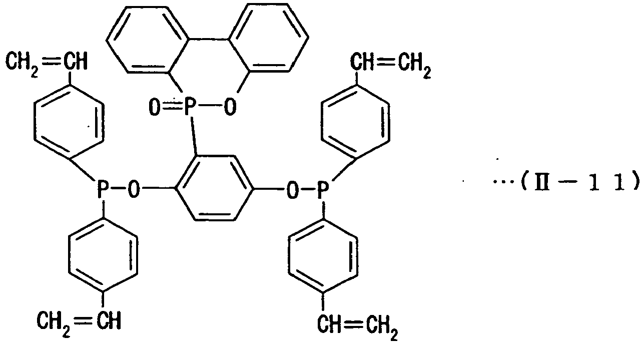

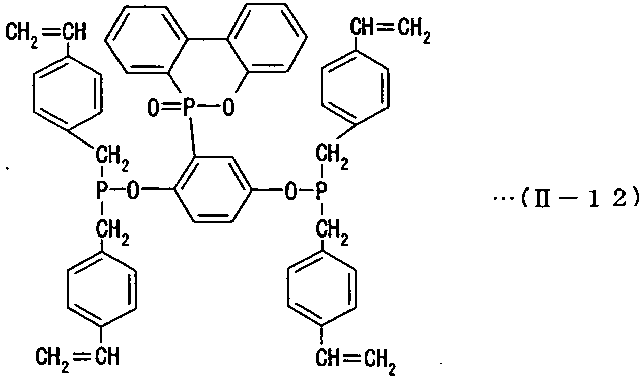

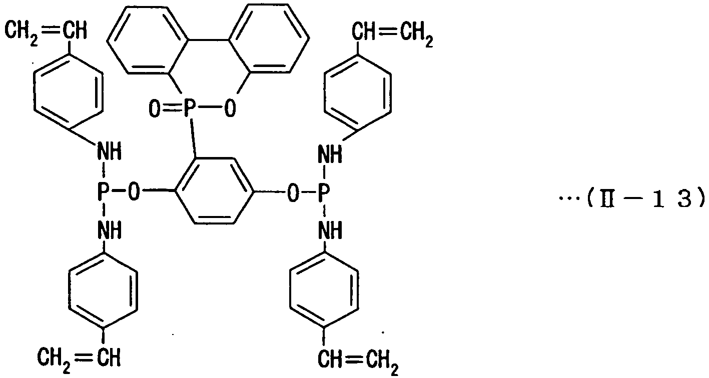

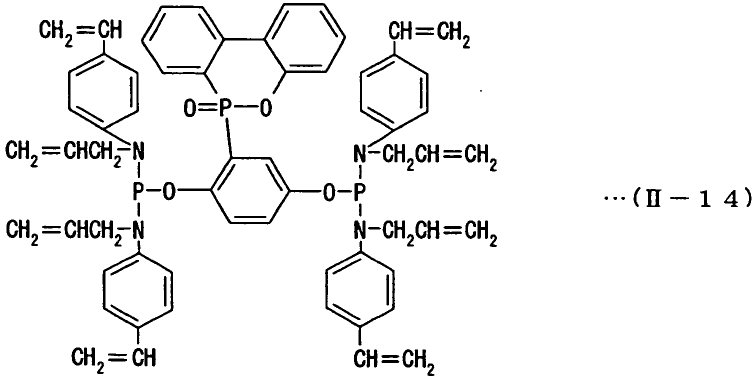

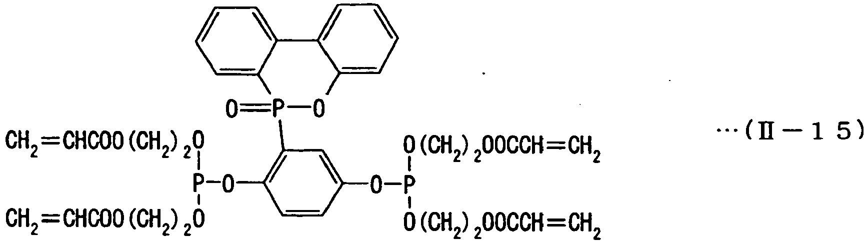

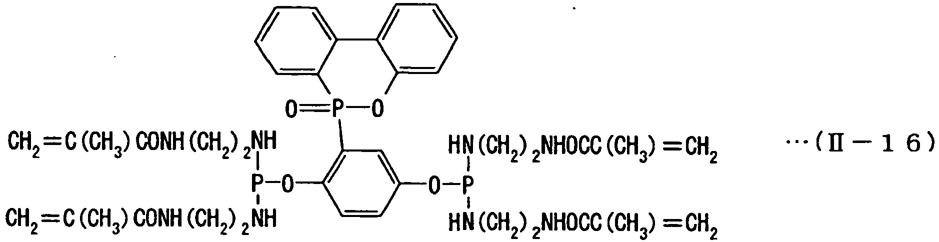

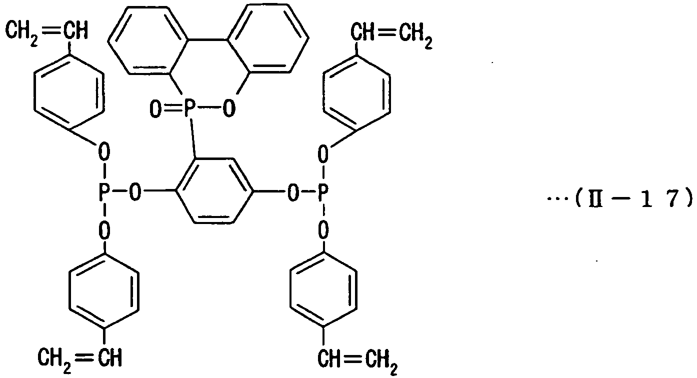

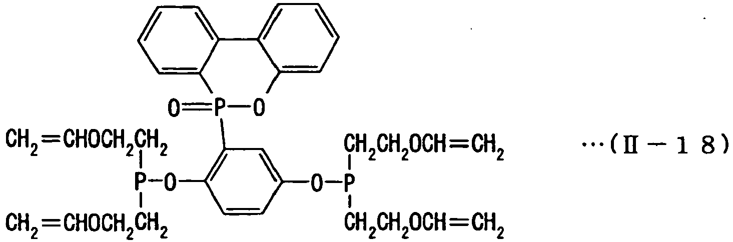

As for the synthesis of above compounds, for example, the compound represented by the structural formula (I-1) can be synthesized by way of: causing Compound (III) shown below (10-(2,5-dihydroxyphenyl)-9-oxo-10-phospho-9,10-dihydrophenant hrene-10-one) serving as a starting material to react with phosphorus oxychloride; and causing the resultant to react with diallylamine to introduce an unsaturated group at an end.

In addition, for example, Compound represented by the structural formula (II-1) can be synthesized by way of: causing Compound (III) shown below (10-(2,5-dihydroxyphenyl)-9-oxo-10-phospho-9,10-dihydrophenant hrene-10-one) serving as a starting material to react with phosphorus trichloride; and causing the resultant to react with diallylamine to introduce an unsaturated group at an end.

R¹ to R⁴ in the general formula (I) and R⁵ to R⁸ in the general formula (II) can be changed by using allylamine, allyl alcohol, allyl bromide, or the like instead of diallylamine, or by using phenylphosphonic dichloride, α-naphthylphosphonic dichloride, *p*-biphenylphosphonic dichloride, or the like instead of phosphorus oxychloride or phosphorus trichloride.

Compound (III) is conventionally known, and, for example, a commercially available product from Sanko Chemical Co., Ltd. under the trade name of HCA-HQ may be used.

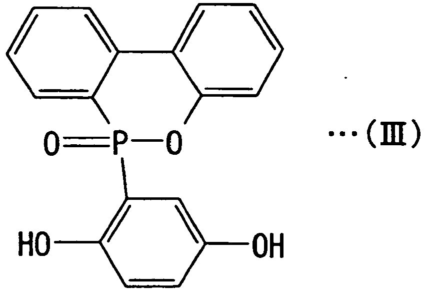

In the present invention, out of the organic cyclic phosphorus compounds represented by the general formula (I) or (II), it is preferable to use in combination of two or more kinds of compounds different from each other in reactivity, that is, two or more kinds of compounds different from each other in number of the above functional groups in one molecule. Since the reaction rate accompanied by crosslinking can be in control through the combinational use, the contraction of a resin composition due to the abrupt advancement of a crosslinking reaction can be prevented.

Incorporation of at least a multifunctional reactive flame retardant out of the organic cyclic phosphorus compounds represented by the general formula (I) or (II) leads to the formation of a uniform three-dimensional network structure by the organic cyclic phosphorus compound.

Next, a product made of flame-retarded resin using any one of the above reactive flame retardants will be described.

The product made of flame-retarded resin of the present invention is obtained by solidifying a resin composition which contains a resin and an organic cyclic phosphorus compound represented by the general formula (I) or (II) and then reacting the resin by heating or irradiation with a radiation with the above-described reactive flame retardant, and is characterized by containing 1 to 20 mass% of the reactive flame retardant with respect to the entirety of the resin composition.

Examples of the thermoplastic resin include: a polyamide-based resin; a polyester-based resin such as a polybutylene terephthalate resin or polyethylene terephthalate; a polyacryl-based resin; a polyimide-based resin; a polycarbonate resin; a polyurethane-based resin; a polystyrene-based resin such as polystyrene, an acrylonitrile-styrene copolymer, or an acrylonitrile-butadiene-styrene copolymer; a polyacetal-based resin; a polyolefin-based resin; a polyphenylene oxide resin; a polyphenylene sulfide resin; and a polybutadiene resin. Of those, in terms of mechanical characteristics, heat resistance, and the like, a polyamide-based resin, a polybutylene terephthalate resin, a polyethylene terephthalate resin, a polycarbonate resin, a polyacryl-based resin, a polyacetal-based resin, or a polyphenylene oxide resin is preferably used.

The content of the reactive flame retardant is 1 to 20 mass%, or more preferably 1 to 15 mass% with respect to the entirety of the resin composition. When the content of the reactive flame retardant is less than 1 mass%, a crosslinking reaction is insufficient, and the mechanical, thermal, and electrical physical properties of a resin product to be obtained are not preferable. It is not preferable that the content of the reactive flame retardant is in excess of 20 mass%. In such resin product, because the amount of the reactive flame retardant is excessive, an un-reacted monomer of the reactive flame retardant or a cracked gas is generated, an oligomerized product bleeds out, and the mechanical characteristics of a resin product deteriorate.

In the present invention, an additive-type flame retardant having no reactivity other than the above reactive flame retardant may be incorporated. As such flame retardant, a non-halogen-based flame retardant is preferable. Examples of such flame retardant include: metal hydrates typified by aluminum hydroxide and magnesium hydroxide; mono-phosphoric esters such as triphenyl phosphate and tricresyl phosphate; condensed-phosphoric esters such as bisphenol A bis(diphenyl) phosphate and resorcinol bis(diphenyl) phosphate; ammonium polyphosphate; polyphosphoric amide; red phosphorus; guanidine phosphate; derivatives of cyanuric acid or isocyanuric acid; melamine derivatives; and silicon-based flame retardants.

Each of those flame retardants may be used alone, or two or more of them may be used in combination. The content of the flame retardant other than the reactive flame retardant is preferably 1 to 20 mass%, or more preferably 3 to 15 mass% with respect to the entirety of the resin composition in order to avoid bleeding out and reductions in mechanical characteristics.

It is more preferable to incorporate, as a flame retardant having reactivity other than the aforementioned reactive flame retardant, 0.5 to 10 parts by mass of a cyclic nitrogen-containing compound having at least one unsaturated group at the end thereof with respect to 1 part by mass of the aforementioned reactive flame retardant.

Preferable examples of the group having an unsaturated group at the end thereof include a diacrylate, a dimethacrylate, a diallylate, a triacrylate, a trimethacrylate, a triallylate, a tetraacrylate, a tetramethacrylate, and a tetraallylate. Of those, an acrylate such as a diacrylate, a triacrylate, or a tetraacrylate is more preferable in terms of reactivity.

Examples of the cyclic nitrogen-containing compound include an isocyanuric ring and a cyanuric ring.

Specific examples of the cyclic nitrogen-containing compound having at least one unsaturated group at the end thereof include derivatives of the above-described cyanuric acid or isocyanuric acid such as isocyanuric acid EO-modified diacrylate, isocyanuric acid EO-modified triacrylate, and triisocyanuric triacrylate.

In the present invention, a crosslinking agent having no flame retardancy but having reactivity with the resin may be additionally incorporated. A multifunctional monomer or oligomer having an unsaturated group at the end of its main skeleton can be used as such crosslinking agent.

The term "crosslinking agent having no flame retardancy but having reactivity with the resin" as used herein refers to a crosslinking agent which is capable of crosslink (reactivity) but which itself does not have flame retardancy. A reactive flame retardant in such case as the cyclic nitrogen-containing compound having at least one unsaturated group at an end thereof is excluded from the scope of the term, since it brings capability of crosslink together with flame retardancy.

Examples of such crosslinking agent include bifunctional to tetrafunctional compounds represented by the following general formulae (a) to (c) . Here, X represents a main skeleton and R⁹ to R¹² each represent a functional group having an unsaturated group at the end thereof. The formula (a) represents a bifunctional compound, the formula (b) represents a trifunctional compound, and the formula (c) represents a tetrafunctional compound.

**R⁹―X―R¹⁰** (a)

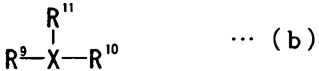

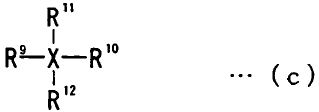

Specific examples thereof include structures represented by the following general formulae in each of which the main skeleton X is an aliphatic alkyl such as a glycerin derivative or a pentaerythritol derivative, an aromatic ring such as trimellitic acid,pyromellitic acid,tetrahydrofuran,or trimethylene trioxane, or bisphenol.

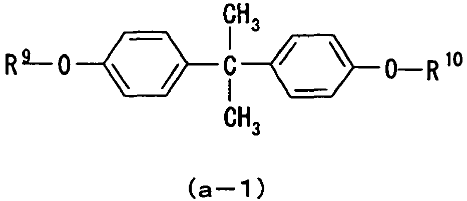

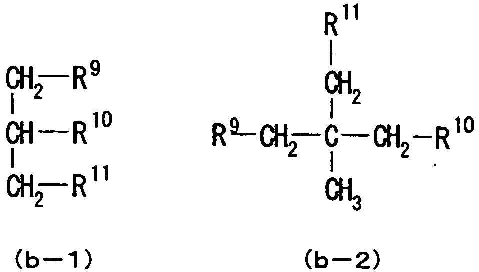

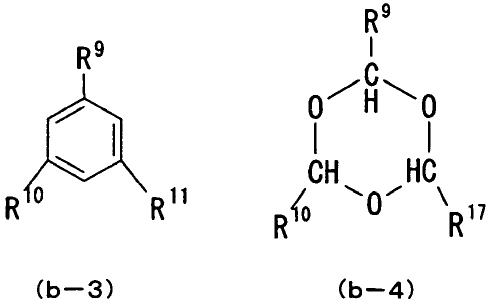

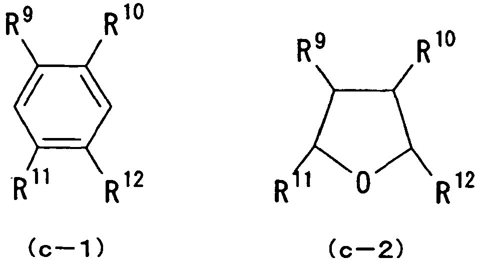

Specific examples of the crosslinking agent include: bifunctional monomers or oligomers such as diacrylates including bisphenol F-EO-modified diacrylate, bisphenol A-EO-modified diacrylate, tripropylene glycol diacrylate, polypropylene glycol diacrylate, polyethylene glycol diacrylate, and pentaerythritol diacrylate monostearate, and dimethacrylates and diallylates thereof;
trifunctional monomers or oligomers such as triacrylates including pentaerythritol triacrylate, trimethylolpropane triacrylate, trimethylolpropane PO-modified triacrylate, and trimethylolpropane EO-modified triacrylate, and trimethacrylates and triallylates thereof; and
tetrafunctional monomers or oligomers such as ditrimethylolpropane tetraacrylate and pentaerythritol tetraacrylate.

The crosslinking agent is obtained by causing one kind selected from allyl bromide, allyl alcohol, allylamine, methallyl bromide, methallyl alcohol, methallylamine, and the like, which serves as a functional group having an unsaturated group at an end thereof, to react with one kind selected from trimellitic acid, pyromellitic acid, tetrahydrofuran tetracarboxylic acid, 1,3,5-trihydroxybenzene, glycerin, pentaerythritol, 2,4,6-tris(chloromethyl)-1,3,5-trioxane, and the like, which serves as the main skeleton X.

The content of the crosslinking agent is preferably 0.5 to 10 parts by mass with respect to 1 part by mass of the reactive flame retardant.

The resin composition to be used in the present invention may contain an inorganic filler, reinforced fibers, various additives, or the like in addition to the above resin and flame retardant.

The incorporation of an inorganic filler improves the mechanical strength and dimensional stability of the resin product. In addition, the inorganic filler serves as a base substance for adsorbing a reactive flame retardant to uniformize the dispersion of the reactive flame retardant.

Any conventionally known inorganic filler can be used, and representative examples thereof include: metal powders of copper, iron, nickel, zinc, tin, stainless steel, aluminum, gold, silver, and the like; fumed silica; aluminum silicate; calcium silicate; silicic acid; water-containing calcium silicate; water-containing aluminum silicate; glass beads; carbon black; a quartz powder; isinglass; talc; mica; clay; titanium oxide; iron oxide; zinc oxide; calcium carbonate; magnesium carbonate; magnesium oxide; calcium oxide; magnesium sulfate; potassiumtitanate; and diatomaceous earth. Each of those inorganic fillers may be used alone, or two or more of them may be used in combination. In addition, each of those inorganic fillers may be treated with a conventionally known surface treatment agent.

The content of the inorganic filler is preferably 1 to 35 mass%, or more preferably 1 to 20 mass% with respect to the entirety of the product made of flame-retarded resin. A content of less than 1 mass% is not preferable because the mechanical strength and dimensional stability of the product made of flame-retarded resin are insufficient, and the adsorption of the reactive flame retardant is insufficient. A content in excess of 35 mass% is not preferable because the product made of flame-retarded resin becomes brittle.

Of the above inorganic fillers, a laminar clay composed of laminating silicate layers is particularly preferably used. Here, the term "laminar clay composed of laminating silicate layers" refers to a clay having a structure in which silicate layers each having a thickness of about 1 nm and a length of one side of about 100 nm are laminated. Accordingly, the laminar clay is dispersed into the resin in a nano order to form a hybrid structure with the resin. As a result, the heat resistance, mechanical strength, and the like of the product made of flame-retarded resin to be obtained are improved. The average particle size of the laminar clay is preferably 100 nm or less.

Examples of the laminar clay include montmorillonite, kaolinite, and mica. Of those, montmorillonite is preferable because of its excellent dispersibility. The surface of the laminar clay may be treated for improving dispersibility into a resin. Such laminar clay may be a commercially available one, and, for example, "Nanomer" (trade name, manufactured by NISSHOIWAI BENTONITE) or "Somasif" (trade name, manufactured by Co-op Chemical) can be used.

The content of the laminar clay is preferably 1 to 10 mass% with respect to the entirety of the product made of flame-retarded resin. The laminar clay may be used alone, or may be used in combination with another inorganic filler.

The incorporation of the reinforced fibers can improve the mechanical strength and dimensional stability of, for example, a molded product. Examples of the reinforced fibers include glass fibers, carbon fibers, and metal fibers. Glass fibers are preferably used in terms of strength and adhesiveness with the resin or with the inorganic filler. One kind of reinforced fibers may be used alone, or two or more kinds of fibers may be used in combination. The fibers may be treated with a conventionally known surface treatment agent such as a silane coupling agent.

In addition, the surfaces of the glass fibers are preferably treated and then coated with a resin. In this case, adhesiveness with a thermoplastic polymer can be additionally improved.

A conventionally known silane coupling agent can be used as the surface treatment agent, and specific examples thereof include silane coupling agents each having at least one alkoxy group chosen from the group consisting of a methoxy group and an ethoxy group and at least one reactive functional group selected from the group consisting of an amino group, a vinyl group, an acrylic group, a methacrylic group, an epoxy group, a mercapto group, a halogen atom, and an isocyanate group.

The resin for coating is not particularly limited, and examples thereof include a urethane resin and an epoxy resin.

The content of the reinforced fibers is preferably 5 to 40 mass%, or more preferably 10 to 35 mass% with respect to the entirety of the product made of flame-retarded resin. A content of less than 5 mass% is not preferable because the mechanical strength of the product made of flame-retarded resin reduces and the dimensional stability thereof becomes insufficient. A content in excess of 40 mass% is not preferable because it becomes difficult to process the resin.

The total content of the inorganic filler and the reinforced fibers is preferably 65 mass% or less, or more preferably 55 mass% or less with respect to the entirety of the product made of flame-retarded resin. A total content of the inorganic filler and the reinforced fibers in excess of 65 mass% is not preferable because the ratio of a resin component reduces to impair moldability or makes the resin product to be obtained brittle, thereby worsening physical properties.

The resin composition to be used in the present invention may be added with any one of common various addition components other than those described above such as a crystal nucleating agent, a colorant, an antioxidant, a release agent, a plasticizer, a heat stabilizer, a lubricant, anda UV inhibitor to the extent thatphysical properties such as heat resistance, weatherability, and impact resistance as objects of the present invention are not significantly impaired. In addition, as described below, a UV initiator or the like can be used when the resin and the reactive flame retardant are allowed to react with each other by means of ultraviolet light.

The colorant is not particularly limited, but is preferably one that does not show color fading when irradiated with a radiation to be described below. For example, an inorganic pigment such as blood red, iron black, carbon, or chrome yellow, or a metal complex such as phthalocyanine is preferably used.

The product made of flame-retarded resin of the present invention is obtained by way in which the resin composition is solidified and then the resin is reacted with the reactive flame retardant by way of heating or irradiation with a radiation.

The resin composition is solidified by means of a conventionally known method. For example, the thermoplastic resin and a reactive flame retardant are melted and kneaded to produce a pellet. Then, the pellet can be molded by means of a conventionally known method such as injection molding, extrusion molding, vacuum molding, or inflation molding. The melting and kneading can be performed by means of a typical melting and kneading processing machine such as a monoaxial or biaxial extruder, a Banbury mixer, a kneader, or a mixing roll. A kneading temperature can be appropriately selected depending on the kind of the thermoplastic resin. For example, in the case of a polyamide-based resin, the kneading is preferably performed at 240 to 280°C. Molding conditions can be appropriately set and are not particularly limited. At this stage, crosslinking does not advance at all, so an extra spool portion at the time of molding can be recycled as a thermoplastic resin.

In the case of preparing a coating film, the resin composition may be applied as it is. Alternatively, the resin composition may be appropriately diluted with a solvent or the like to prepare a solution or suspension that can be applied, and the solution or suspension may be dried by means of a conventionally known method to prepare a coating film. A coating method such as roller coating, spraying, immersion, or spin coating can be used for preparing a coating film, and a method to be used is not particularly limited.

In the resin composition, an unsaturated bond at an end of the reactive flame retardant reacts with the resin as a result of heating or irradiation with a radiation to cause a crosslinking reaction, so the flame retardant component is stably present in the resin.

When heating is employed as means for reacting the reactive flame retardant and the resin, the resin and the reactive flame retardant are reacted at a temperature higher than the temperature at which the resin is molded by preferably 5°C or higher, or more preferably 10°C or higher.

When a radiation is used as means for crosslinking, an electron beam, an α ray, a γ ray, an X-ray, ultraviolet light, or the like can be used. The term "radiation" as used herein refers to a radiation in a broad sense, and specifically includes an electromagnetic wave such as an X-ray or ultraviolet light in addition to a particle beam such as an electron beam or an α ray.

The resin composition is preferably irradiated with an electron beam or a γ ray out of the foregoing. A conventionally known electron accelerator or the like can be used for irradiation with an electron beam, and an accelerating energy of 2.5 MeV or more is preferable. Irradiation equipment on the basis of a conventionally known cobalt 60 radiation source or the like can be used for irradiation with a γ ray.

Irradiation equipment on the basis of a conventionally known cobalt 60 radiation source or the like can be used for irradiation with a γ ray. A γ ray is preferable because it has stronger permeability than that of an electron beam, so irradiation can be performed uniformly. However, the γ ray has strong radiation intensity, so the dose of the ray must be controlled in order to avoid excessive irradiation.

The irradiation dose of a radiation is preferably 10 kGy or more, or more preferably 10 to 45 kGy. An irradiation dose in this range provides a resin product excellent in the above physical properties owing to crosslinking. An irradiation dose of less than 10 kGy is not preferable because the formation of a three-dimensional network structure due to crosslinking may be nonuniform and an unreacted crosslinking agent may bleed out. An irradiation dose in excess of 45 kGy is not preferable either because the internal strain of the resin product due to an oxidation decomposition product remains to cause deformation, contraction, and the like.

The product made of flame-retarded resin of the present invention thus produced is excellent in mechanical characteristics, electrical characteristics, dimensional stability, and moldability in addition to heat resistance and flame retardancy basically necessary for a molded product. Therefore, the resin product can be suitably used for an electrical or electronic component where high levels of heat resistance and flame retardancy are required, and for an automobile part or an optical part such as: a member for supporting a contact of an electromagnetic switch, a breaker, or the like; a substrate such as a printed board; a package for an integrated circuit; or a housing for an electrical component.

Specific examples of such electrical or electronic component include: a receiving board; a distribution board; an electromagnetic switch; a breaker; a transformer; an electromagnetic contactor; a circuit protector; a relay; various sensors; various motors; and semiconductor devices such as a diode, a transistor, and an integrated circuit.

The resin product can be suitably used for an automobile part such as: a cooling fan; a bumper; a brake cover; an interior part such as a panel; a sliding part; a sensor; or a motor.

The resin product can be used not only as a molded product but also as a flame-retardant coating film for the molded product, fiber, or the like.

In addition, excellent heat resistance and excellent flame retardancy can be imparted when the resin product is used for, for example, sealing, covering, and insulating the above-described electronic or electrical component such as a semiconductor device. That is, for example, the resin composition is sealed to cure the resin, and the above-described reaction by heating or irradiation with a radiation is performed, whereby the resin product can be used as a flame-retardant sealing compound for sealing an electronic component or an electrical element such as a semiconductor chip or a ceramic capacitor. Sealing can be performed by means of casting, potting, transfer molding, injection molding, compression molding, or the like. An electronic or electrical component to be sealed is not particularly limited, and examples thereof include a liquid crystal, an integrated circuit, a transistor, a thyristor, a diode, and a capacitor.

As described above, according to the present invention, there can be provided: a non-halogen-based reactive flame retardant which is excellent in flame retardancy when added to a resin in a small amount and can be prevented from bleeding out or the like; and a product made of flame-retarded resin obtained with the same. Therefore, the product made of flame-retarded resin can find use in applications including: resin molded products such as an electrical component and an electronic component; sealing compounds for a semiconductor and the like; and coating films.

Hereinafter, the present invention will be described in more detail by way of examples. However, the present invention is not limited to the examples.

### [Synthesis of reactive flame retardants represented by general formulae (I)]

### Synthesis Example (I-1) (Synthesis of Compound (I-1))

91.99 g (0.600 mol) of phosphorus oxychloride and 300 ml of distilled THF were loaded into a 1, 000-ml four-necked flask equipped with a reflux pipe with a dry pipe, a mechanical stirring device, a nitrogen-introducing pipe, and a dropping funnel, and the whole was gently stirred in a stream of nitrogen.

At 0 to 5°C, a solution prepared by dissolving 32.43 g (0.100 mol) of 10-(2,5-dihydroxyphenyl)-9-oxo-10-phospho-9,10-dihydrophenanth rene-10-one as the compound represented by the structural formula (III) and 22.26 g (0.220 mol) of triethylamine into 300 ml of THF was added from the dropping funnel over 3 hours.

After that, the resultant was reacted at the above temperature for 6 hours and at room temperature for 12 hours, and then distilled the solvent, excessive phosphorus oxychloride, and triethylamine off under reduced pressure. Furthermore, 300 ml of dry ethyl acetate were added to the residue, and the whole was stirred. Triethylamine hydrochloride remaining after the dissolution was filtered out, and the solution was distilled off under reduced pressure.

The entire amount of the residue and 300 ml of distilled THF were loaded into the same reactor as that described above. Then, at 0 to 5°C, a solution prepared by dissolving 58.30 g (0.600 mol) of diallylamine and 44.52 g (0.440 mol) of triethylamine into 200 ml of THF was added from the dropping funnel over 3 hours. After that, the resultant was reacted at the above temperature for 6 hours and at room temperature for 12 hours, and then distilled the solvent and excessive amines off under reduced pressure. The residue was dissolved into 300 ml of ethyl acetate. The solution was shaken with water to separate an ethyl acetate phase, and the phase was dried with anhydrous sodium sulfate. The drying agent was filtered out, and the solution was distilled off under reduced pressure. Thus, 75.28 g of a target compound were obtained (94% yield).

The measurements of the compound in the infrared absorption spectrum, TOF-Mass spectrum, and NMR resulted in the followings. Thus, the measurements identified the structure of Compound (I-1) described above.
Infrared absorption spectrum (cm⁻¹): ν ring 1603, 1495, ν C=C 1635, ν P=O 1160 to 1250
TOF-Mass spectrum (M/Z) : 802, 803 (calculatedmolecularweight = 800.803)
¹H-NMR spectrum (δ, ppm): CH₂= 5.0 to 5.1 (16H), =CH- 6.0 to 6.1 (8H), -CH₂- 3.2 (16H), aromatic C-H 6.8 to 7.4 (11H)

### Synthesis Example (I-2) (Synthesis of Compound (I-2))

61.49 g of a target compound were obtained (96% yield) in the same manner as in Synthesis Example (I-1) except that 34.26 g (0.600 mol) of allylamine were used instead of diallylamine.

The measurements of the compound in the infrared absorption spectrum, TOF-Mass spectrum, and NMR resulted in the followings. Thus, the measurements identified the structure of Compound (I-2) described above.
Infrared absorption spectrum (cm⁻¹): v NH 3260, v ring 1603, 1495, v C=C 1635, δ NH 1630, v P=O 1160 to 1250
TOF-Massspectrum(M/Z):642, 643(calculated molecular weight = 640.5445)
¹H-NMR spectrum (δ, ppm): CH₂= 5.1 to 5.2 (8H), =CH- 6.1 to 6.2 (4H), -CH₂- 3.3 (8H), H-N< 3.4 to 3.5 (4H), aromatic C-H 6.8 to 7.4 (11H)

### Synthesis Example (1-3) (Synthesis of Compound (1-3))

61.87 g of a target compound were obtained (96% yield) in the same manner as in Synthesis Example (I-1) except that 34.85 g (0.600 mol) of allyl alcohol were used instead of diallylamine.

The measurements of the compound in the infrared absorption spectrum, TOF-Mass spectrum, and NMR resulted in the followings. Thus, the measurements identified the structure of Compound (I-3) described above.
Infrared absorption spectrum (cm⁻¹): ν ring 1603, 1495, ν C=C 1635, v P=O 1160 to 1250, ν P-O-C 1220, 1260
TOF-Mass spectrum (M/Z) : 646, 647 (calculatedmolecularweight = 644.4969)
¹H-NMR spectrum (δ, ppm): CH₂= 4.9 to 5.0 (8H), =CH- 5.8 to 5.9 (4H), -CH₂- 3.1 (8H), aromatic C-H 6.8 to 7.4 (11H)

### Synthesis Example (I-4) (Synthesis of Compound (1-4))

72.46 g of a target compound were obtained (95% yield) in the same manner as in Synthesis Example (I-1) except that 116. 99 g (0.600 mol) of phenylphosphonic dichloride were used instead of phosphorous oxychloride and that 29.15g (0.300 mol) of diallylamine and 22.26 g (0.220 mol) of triethylamine was used.

The measurements of the compound in the infrared absorption spectrum, TOF-Mass spectrum, and NMR resulted in the followings. Thus, the measurements identified the structure of Compound (I-4) described above.
Infrared absorption spectrum (cm⁻¹) : ν ring 1603, 1495, ν C=C 1635, ν P=O 1160 to 1250
TOF-Mass spectrum (M/Z) : 746, 765 (calculatedmolecularweight = 762.7213)
¹H-NMR spectrum (δ, ppm): CH₂= 5.0 to 5.1 (8H), =CH- 6.0 to 6.1 (4H), -CH₂- 3.2 (8H), aromatic C-H 6.8 to 7.4 (21H)

### Synthesis Example (I-5) (Synthesis of Compound (1-5))

62.80 g of a target compound were obtained (92% yield) in the same manner as in Synthesis Example (I-4) except that 17.13 g (0.300 mol) of allylamine were used instead of diallylamine.

The measurements of the compound in the infrared absorption spectrum, TOF-Mass spectrum, and NMR resulted in the followings. Thus, the measurements identified the structure of Compound (I-5) described above.
Infrared absorption spectrum (cm⁻¹) : ν NH 3260, ν ring 1603, 1495, v C=C 1635, δ NH 1630, ν P=O 1160 to 1250
TOF-Mass spectrum (M/Z) : 684, 685 (calculatedmolecularweight = 682.5921)
¹H-NMR spectrum (δ, ppm): CH₂= 5.1 to 5.2 (4H), =CH- 6.1 to 6.2 (2H), -CH₂- 3.3 (4H), H-N< 3.4 to 3.5 (2H), aromatic C-H 6.8 to 7.5 (21H)

### Synthesis Example (1-6) (Synthesis of Compound (I-6))

65.72 g of a target compound were obtained (96% yield) in the same manner as in Synthesis Example (I-4) except that 17.43 g (0.300 mol) of allyl alcohol were used instead of diallylamine.

The measurements of the compound in the infrared absorption spectrum, TOF-Mass spectrum, and NMR resulted in the followings. Thus, the measurements identified the structure of Compound (I-6) described above.
Infrared absorption spectrum (cm⁻¹): ν ring 1603, 1495, ν C=C 1635, v P=O 1160 to 1250, ν P-O-C 1220, 1260
TOF-Mass spectrum (M/Z) : 686, 687 (calculatedmolecularweight = 684.5623)
¹H-NMR spectrum (δ, ppm): CH₂= 4.9 to 5.0 (4H), =CH- 5.7 to 5.8 (2H), -CH₂- 3.0 (4H), aromatic C-H 6.7 to 7.4 (21H)

### Synthesis Example (I-7) (Synthesis of Compound (I-7))

81.97 g of a target compound were obtained (about 95% yield) in the same manner as in Synthesis Example (I-4) except that 47.02 g (0.600 mol) of α-naphthylphosphonic dichloride were used instead of phenylphosphonic dichloride.

The measurements of the compound in the infrared absorption spectrum, TOF-Mass spectrum, and NMR resulted in the followings. Thus, the measurements identified the structure of Compound (I-7) described above.
Infrared absorption spectrum (cm⁻¹) : ν ring 1603, 1495, ν C=C 1635, v P=O 1160 to 1250
TOF-Mass spectrum (M/Z):864,865 (calculated molecular weight = 862.8409)
¹H-NMR spectrum (δ, ppm): CH₂= 4.9 to 5.0 (8H), =CH- 5.9 to 6.1 (4H), -CH₂- 3.0 (8H), aromatic C-H 6.7 to 7.4 (25H)

### Synthesis Example (1-8) (Synthesis of Compound (1-8))

78.47 g of a target compound were obtained (94% yield) in the same manner as in Synthesis Example (I-5) except that 162.65 g (0.600 mol) of *p*-biphenylphosphonic dichloride were used instead of phenylphosphonic dichloride.

The measurements of the compound in the infrared absorption spectrum, TOF-Mass spectrum, and NMR resulted in the followings. Thus, the measurements identified the structure of Compound (I-8) described above.
Infrared absorption spectrum (cm⁻¹): ν NH 3260, ν ring 1603, 1495, ν C=C 1635, δ NH 1630, ν P=O 1160 to 1250
TOF-Mass spectrum (M/Z) : 836, 837 (calculatedmolecularweight = 834.7873)
¹H-NMR spectrum (δ, ppm): CH₂= 5.0 to 5.1 (4H), =CH- 6.0 to 6.1 (2H), -CH₂- 3.2 (4H), H-N< 3.4 to 3.5 (2H), aromatic C-H 6.8 to 7.5 (29H)

### Synthesis Example (1-9) (Synthesis of Compound (1-9))

10.94 g (0.450 mol) of a metal magnesium powder were suspended into 300 ml of distilled diethyl ether. Then, in an inert gas atmosphere, 54.44 g (0.450 mol) of allyl bromide were dropped to the suspension while a moderate boiling-point reflux state was maintained. The resultant was reacted for about 12 hours until magnesium was completely dissolved, to thereby yield a solution.

After cooling, 53.4 g of a target compound were obtained (92% yield) in the same manner as in Synthesis Example (I-1) except that the above solution was used for reaction instead of a mixed solution of diallylamine and triethylamine.

The measurements of the compound in the infrared absorption spectrum, TOF-Mass spectrum, and NMR resulted in the followings. Thus, the measurements identified the structure of Compound (I-9) described above.
Infrared absorption spectrum (cm⁻¹) : ν ring 1603, 1498, ν C=C 1630, ν P=O 1160 to 1250
TOF-Massspectrum(M/Z):582,583(calculated molecular weight = 580.4963)
¹H-NMR spectrum (δ, ppm): CH₂= 4.6 to 4.7 (8H), =CH- 5.5 to 5.6 (4H), -CH₂- 2.9 (8H), aromatic C-H 6.8 to 7.5 (11H)

### Synthesis Example (I-10) (Synthesis of Compound (I-10))

An allyl magnesium bromide solution was prepared in an amount on a half scale as Synthesis Example (I-9).
After cooling, 61. 99 g of a target compound were obtained (95% yield) in the same manner as in Synthesis Example (I-4) except that the above solution was used for reaction instead of a mixed solution of diallylamine and triethylamine.
The measurements of the compound in the infrared absorption spectrum, TOF-Mass spectrum, and NMR resulted in the followings. Thus, the measurements identified the structure of Compound (I-10) described above.
Infrared absorption spectrum (cm⁻¹) : ν ring 1603, 1498, ν C=C 1630, ν P=O 1160 to 1250
TOF-Mass spectrum (M/Z) : 654, 655 (calculatedmolecularweight 652.5623)
¹H-NMR spectrum (δ, ppm): CH₂= 4.5 to 4.6 (4H), =CH- 5.4 to 5.5 (2H), -CH₂- 2.9 (4H), aromatic C-H 6.8 to 7.5 (21H)

### Synthesis Example (I-11) (Synthesis of Compound (I-11))

A corresponding Grignard reagent was prepared in the same manner as in Synthesis Example (I-9) except that 82.37 g (0.450 mol) of *p*-bromostyrene were used instead of allyl bromide.

After cooling, 77.08 g of a target compound were obtained (93% yield) in the same manner as in Synthesis Example (I-1) except that the above solution was used for reaction instead of a mixed solution of diallylamine and triethylamine.

The measurements of the compound in the infrared absorption spectrum, TOF-Mass spectrum, and NMR resulted in the followings. Thus, the measurements identified the structure of Compound (I-11) described above.
Infrared absorption spectrum (cm⁻¹) : ν ring 1603, 1498, ν C=C 1635, ν P=O 1160 to 1250
TOF-Massspectrum (M/Z):830,831(calculated molecular weight 828.7795)
¹H-NMR spectrum (δ, ppm): CH₂= 4.2 to 4.3 (8H), =CH- 5.2 to 5.3 (4H), aromatic C-H 6.8 to 7.5 (27H)

### Synthesis Example (1-12) (Synthesis of Compound (I-12))

A corresponding Grignard reagent was prepared in the same manner as in Synthesis Example (I-9) except that 68.68 g (0.450 mol) of *p*-chloromethylstyrene were used instead of allyl bromide.

After cooling, 84.44 g of a target compound were obtained (95% yield) in the same manner as in Synthesis Example (I-1) except that the above solution was used for reaction instead of a mixed solution of diallylamine and triethylamine.

The measurements of the compound in the infrared absorption spectrum, TOF-Mass spectrum, and NMR resulted in the followings. Thus, the measurements identified the structure of Compound (I-12) described above.
Infrared absorption spectrum (cm⁻¹) : ν ring 1605, 1498, ν C=C 1630, v P=O 1160 to 1250
TOF-Mass spectrum (M/Z):886,887 (calculated molecular weight 884.8867)
¹H-NMR spectrum (δ, ppm): CH₂= 4.2 to 4.3 (8H), =CH- 5.2 to 5.3 (4H), -CH₂- 2.9 (8H), aromatic C-H 6.8 to 7.5 (27H)

### Synthesis Example (I-13) (Synthesis of Compound (1-13))

81.77 g of a target compound were obtained (92% yield) in the same manner as in Synthesis Example (I-2) except that 71. 50 g (0.600 mol) of *p*-aminostyrene were used instead of allalyamine.

The measurements of the compound in the infrared absorption spectrum, TOF-Mass spectrum, and NMR resulted in the followings. Thus, the measurements identified the structure of Compound (1-13) described above.
Infrared absorption spectrum (cm⁻¹): ν NH 3255, v ring 1605, 1500, v C=C 1635, δ NH 1630, v P=O 1160 to 1250
TOF-Mass spectrum (M/Z) : 890, 891 (calculatedmolecularweight = 888.8391)
¹H-NMR spectrum (δ, ppm): CH₂= 4.3 to 4.4 (8H), =CH- 5.1 to 5.2 (4H), H-N< 3.5 to 3.6 (4H), aromatic C-H 6.8 to 7.4 (27H)

### Synthesis Example (I-14) (Synthesis of Compound (I-14))

99.66 g of a target compound were obtained (95% yield) in the same manner as in Synthesis Example (I-13) except that 95.54 g (0.600 mol) of N-allyl-p-aminostyrene were used instead of *p*-aminostyrene.

The measurements of the compound in the infrared absorption spectrum, TOF-Mass spectrum, and NMR resulted in the followings. Thus, the measurements identified the structure of Compound (I-14) described above.
Infrared absorption spectrum (cm⁻¹) : ν ring 1605, 1500, ν C=C 1635, ν P=O 1160 to 1250
TOF-Mass spectrum (M/Z): 1051, 1052 (calculated molecular weight = 1049.0975)
¹H-NMR spectrum (δ, ppm) : CH₂= 4.3 to 4.4 and 4.8 to 5.0 (16H), =CH- 5.1 to 5.2 and 5.7 to 5.8 (8H), -CH₂- 3.0 to 3.1 (8H), aromatic C-H 6.8 to 7.4 (27H)

### Synthesis Example (1-15) (Synthesis of Compound (1-15))

84.16 g of a target compound were obtained (96% yield) in the same manner as in Synthesis Example (I-3) except that 69.67 g (0.600 mol) of 2-hydroxyethylacryalte were used instead of allyl alcohol.

The measurements of the compound in the infrared absorption spectrum, TOF-Mass spectrum, and NMR resulted in the followings. Thus, the measurements identified the structure of Compound (1-15) described above.
Infrared absorption spectrum (cm⁻¹) : v C=O 1720, v ring 1605, 1495, v C=C 1630, v P=O 1160 to 1250,v P-O-C 1220, 1260
TOF-Mass spectrum (M/Z) : 878, 879 (calculatedmolecularweight = 876.6475)
¹H-NMR spectrum (δ, ppm): CH₂₌ 4.9 to 5.0 (8H), =CH- 5.8 to 5.9 (4H), -COOCH₂- 3.4 (8H), -CH₂O- 3.1 (8H), aromatic C-H 6.8 to 7.4 (11H)

### Synthesis Example (I-16) (Synthesis of Compound (I-16))

80.67 g of a target compound were obtained (92% yield) in the same manner as in Synthesis Example (I-2) except that 76.90 g (0.600 mol) of ethylenediamine monoacrylamide were used instead of allylamine.

The measurements of the compound in the infrared absorption spectrum, TOF-Mass spectrum, and NMR resulted in the followings. Thus, the measurements identified the structure of Compound (I-16) described above.
Infrared absorption spectrum (cm⁻¹): ν NH 3260, amide-II 1655, ν ring 1605, 1495, ν C=C 1630, ν P=O 1160 to 1250, ν P-O-C 1220, 1260
TOF-Massspectrum(M/Z):878,879(calculated molecular weight = 876.8299)
¹H-NMR spectrum (δ, ppm): CH₂= 4.8 to 5.0 (8H), -COOCH₂- 3.4 (8H), -CH₂O- 3.1 (8H), -CH₃ 1.8 (12H), aromatic C-H 6.8 to 7.4 (11H)

### Synthesis Example (I-17) (Synthesis of Compound (I-17))

83.03 g of a target compound were obtained (93% yield) in the same manner as in Synthesis Example (I-3) except that 72.09 g (0.600 mol) of *p*-hydroxystyrene were used instead of allyl alcohol.

The measurements of the compound in the infrared absorption spectrum, TOF-Mass spectrum, and NMR resulted in the followings. Thus, the measurements identified the structure of Compound (I-17) described above.
Infrared absorption spectrum (cm⁻¹): ν ring 1605, 1495, ν C=C 1630, ν P=O 1160 to 1250, ν P-O-C 1220, 1260
TOF-Mass spectrum (M/Z) : 894, 895 (calculatedmolecularweight = 892.7795)
¹H-NMR spectrum (δ, ppm): CH₂= 4.8 to 5.0 (8H), =CH- 5.7 to 5.9 (4H), aromatic C-H 6.8 to 7.4 (27H)

### Synthesis Example (I-18) (Synthesis of Compound (I-18))

6.94 g (1.00 mol) of a metal lithium piece were suspended into 250 ml of distilled ether. While the suspension was vigorously stirred, a solution of 69.26 g (0.650 mol) of 2-chloroethylvinyl ether in 300 ml of distilled ether was dropped, and a moderate boiling state was maintained. After the dropping, the resultant was subjected to boiling-point reflux for 1 hour and cooled. After that, excessive metal lithium was removed by means of decantation.
64.45 g of a target compound were obtained (92% yield) in the same manner as in Synthesis Example (I-1) except that the entire amount of the organic lithium compound solution was used instead of a mixed solution of diallylamine and triethylamine.

The measurements of the compound in the infrared absorption spectrum, TOF-Mass spectrum, and NMR resulted in the followings. Thus, the measurements identified the structure of Compound (I-18) described above.

Infrared absorption spectrum (cm⁻¹) : ν ring 1605, 1495, ν C=C 1635, ν P=O 1160 to 1250, ν P-O-C 1220, 1260
TOF-Massspectrum (M/Z): 702, 703 (calculated molecular weight = 700.6035)
¹H-NMR spectrum (δ, ppm): CH₂= 4.8 to 5.0 (8H), =CH- 5.7 to 5.9 (4H), -O-CH₂- 4.3 to 4.4 (8H), -CH₂-P- 3.8 to 3.9 (8H), aromatic C-H 6.8 to 7.4 (11H)

### [Synthesis of reactive flame retardants represented by general formula (II)]

### Synthesis Example (II-1) (Synthesis of Compound (II-1))

82.39 g (0.600 mol) of phosphorus trichloride and 300 ml of distilled THF were loaded into a 1, 000-ml four-necked flask equipped with a reflux pipe with a dry pipe, a mechanical stirring device, a nitrogen-introducing pipe, and a dropping funnel, and the whole was gently stirred in a stream of nitrogen.

At 0 to 5°C, a solution prepared by dissolving 32.43 g (0.100 mol) of 10-(2,5-dihydroxyphenyl)-9-oxo-10-phospho-9,10-dihydrophenanth rene-10-one as the compound represented by the structural formula (III) and 22.26 g (0.220 mol) of triethylamine into 300 ml of THF was added from the dropping funnel over 3 hours.

After that, the resultant was reacted at the above temperature for 6 hours and at room temperature for 12 hours, and then distilled the solvent, excessive phosphorus oxychloride, and triethylamine off under reduced pressure. Furthermore, 300 ml of dry ethyl acetate were added to the residue, and the whole was stirred. Triethylamine hydrochloride remaining after the dissolution was filtered out, and the solution was distilled off under reduced pressure.

The entire amount of the residue and 300 ml of distilled THF were loaded into the same reactor as that described above. Then, at 0 to 5°C, a solution prepared by dissolving 58.30 g (0.600 mol) of diallylamine and 44.52 g (0.440 mol) of triethylamine into 200 ml of THF was added from the dropping funnel over 3 hours.

After that, the resultant was reacted at the above temperature for 6 hours and at room temperature for 12 hours, to thereby distill the solvent and excessive amines off under reduced pressure. The residue was dissolved into 300 ml of ethyl acetate. The solution was shaken with water to separate an ethyl acetate phase, and the phase was dried with anhydrous sodium sulfate. The drying agent was filtered out, and the solution was distilled off under reduced pressure. Thus, 72.27 g of a target compound were obtained (94% yield).

The measurements of the compound in the infrared absorption spectrum, TOF-Mass spectrum, and NMR resulted in the followings. Thus, the measurements identified the structure of Compound (II-1) described above.
Infrared absorption spectrum (cm⁻¹): ν ring 1603, 1495, v C=C 1635, v P=O 1160 to 1250
TOF-Massspectrum(M/Z):770,771(calculated molecular weight = 768.8143)
¹H-NMR spectrum (δ, ppm): CH₂= 4.8 to 5.0 (16H), =CH- 5.7 to 5.9 (8H), -CH₂- 3.0 (16H), aromatic C-H 6.7 to 7.3 (11H)

### Synthesis Example (II-2) (Synthesis of Compound (II-2))

55.99 g of a target compound were obtained (92% yield) in the same manner as in Synthesis Example (II-1) except that 34.26 g (0.600 mol) of allylamine were used instead of diallylamine.

The measurements of the compound in the infrared absorption spectrum, TOF-Mass spectrum, and NMR resulted in the followings. Thus, the measurements identified the structure of Compound (II-2) described above.
Infrared absorption spectrum (cm⁻¹): ν NH 3060, ν ring 1603, 1495, v C=C 1635, δ NH 1610, v P=O 1160 to 1250
TOF-Massspectrum(M/Z):610, 611(calculated molecular weight = 608.5559)
¹H-NMR spectrum (δ, ppm) : CH₂= 4.7 to 4.9 (8H), =CH- 5.6 to 5.7 (4H), -CH₂- 3.0 (8H), H-N< 3.2 to 3.3 (4H), aromatic C-H 6.8 to 7.4 (11H)

### Synthesis Example (II-3) (Synthesis of Compound (II-3))

55.73 g of a target compound were obtained (96% yield) in the same manner as in Synthesis Example (II-1) except that 34.85 g (0.600 mol) of allyl alcohol were used instead of diallylamine.

The measurements of the compound in the infrared absorption spectrum, TOF-Mass spectrum, and NMR resulted in the followings. Thus, the measurements identified the structure of Compound (II-3) described above.
Infrared absorption spectrum (cm⁻¹): ν ring 1603, 1500, ν C=C 1635, ν P=O 1160 to 1250, ν P-O-C 1220, 1260
TOF-Mass spectrum (M/Z) : 582, 583 (calculatedmolecularweight = 580.4963)
¹H-NMR spectrum (δ, ppm): CH₂₌ 4.7 to 4.9 (8H), =CH- 5.5 to 5.7 (4H), -CH₂- 2.9 (8H), aromatic C-H 6.8 to 7.5 (11H)

### Synthesis Example (II-4) (Synthesis of Compound (II-4))

69.42 g of a target compound were obtained (95% yield) in the same manner as in Synthesis Example (II-1) except that 107.39 g (0.600 mol) of dichlorophenyl phosphine were used instead of phosphorus trichloride, and that 29.15 g (0.300 mol) of diallylamine and 22.26g (0.220 mol) of triethylamine were used.

The measurements of the compound in the infrared absorption spectrum, TOF-Mass spectrum, and NMR resulted in the followings. Thus, the measurements identified the structure of Compound (II-4) described above.
Infrared absorption spectrum (cm⁻¹): ν ring 1603, 1495, ν C=C 1635, v P=O 1160 to 1250
TOF-Mass spectrum (M/Z): 732, 733 (calculated molecular weight = 730.7213)
¹H-NMR spectrum (δ, ppm): CH₂= 4.8 to 5.0 (8H), =CH- 5.6 to 5.7 (4H), -CH₂- 3.0 (8H), aromatic C-H 6.8 to 7.4 (21H)

### Synthesis Example (II-5) (Synthesis of Compound (II-5))

61.16 g of a target compound were obtained (94% yield) in the same manner as in Synthesis Example (II-4) except that 17.13 g (0.300 mol) of allylamine were used instead of diallylamine.

The measurements of the compound in the infrared absorption spectrum, TOF-Mass spectrum, and NMR resulted in the followings. Thus, the measurements identified the structure of Compound (II-5) described above.
Infrared absorption spectrum (cm⁻¹): ν NH 3080, v ring 1605, 1495, ν C=C 1630, δ NH 1620, ν P=O 1160 to 1250
TOF-Mass spectrum (M/Z): 652, 653 (calculated molecular weight = 650.5921)
¹H-NMR spectrum (δ, ppm) : CH₂= 4.7 to 4.9 (4H), =CH- 5.6 to 5.8 (2H), -CH₂- 3.0 (4H), H-N< 3.2 to 3.3 (2H), aromatic C-H 6.8 to 7.5 (21H)

### Synthesis Example (II-6) (Synthesis of Compound (II-6))

62.65 g of a target compound were obtained (96% yield) in the same manner as in Synthesis Example (II-4) except that 17.43 g (0.300 mol) of allyl alcohol were used instead of diallylamine.

The measurements of the compound in the infrared absorption spectrum, TOF-Mass spectrum, and NMR resulted in the followings. Thus, the measurements identified the structure of Compound (II-6) described above.
Infrared absorption spectrum (cm⁻¹): ν ring 1603, 1495, ν C=C 1635, ν P=O 1160 to 1250, ν P-O-C 1220, 1260
TOF-Mass spectrum (M/Z) : 654, 655 (calculatedmolecularweight = 652.5623)
¹H-NMR spectrum (δ, ppm): CH₂= 4.5 to 4.7 (4H), =CH- 5.4 to 5.6 (2H), -CH₂- 3.2 (4H), aromatic C-H 6.7 to 7.4 (21H)

### Synthesis Example (II-7) (Synthesis of Compound (II-7))

76.44 g of a target compound were obtained (92% yield) in the same manner as in Synthesis Example (II-4) except that 137.42 g (0.600 mol) of dichloro α-naphthylphosphine were used instead of dichlorophenyl phosphine.

The measurements of the compound in the infrared absorption spectrum, TOF-Mass spectrum, and NMR resulted in the followings. Thus, the measurements identified the structure of Compound (II-7) described above.
Infrared absorption spectrum (cm⁻¹): ν ring 1605, 1495, ν C=C 1635, ν P=O 1160 to 1250
TOF-Mass spectrum(M/Z): 832, 833 (calculated molecular weight = 830.8409)
¹H-NMR spectrum (δ, ppm): CH₂= 4.5 to 4.7 (8H), =CH- 5.4 to 5.6 (4H), -CH₂- 3.0 (8H), aromatic C-H 6.7 to 7.4 (25H)

### Synthesis Example (II-8) (Synthesis of Compound (II-8))

75.46 g of a target compound were obtained (94% yield) in the same manner as in Synthesis Example (II-5) except that 150.63 g (0.600 mol) of dichloro *p*-biphenylphosphine were used instead of dichlorophenyl phosphine.

The measurements of the compound in the infrared absorption spectrum, TOF-Mass spectrum, and NMR resulted in the followings. Thus, the measurements identified the structure of Compound (II-8) described above.
Infrared absorption spectrum (cm⁻¹): ν NH 3060, ν ring 1605, 1495, ν C=C 1635, δ NH 1620, ν P=O 1160 to 1250
TOF-Mass spectrum (M/Z): 804, 805 (calculated molecular weight = 802.7873)
¹H-NMR spectrum (δ, ppm): CH₂= 4.6 to 4.7 (4H), =CH- 5.5 to 5.6 (2H), -CH₂- 3.1 (4H), H-N< 3.4 to 3.5 (2H), aromatic C-H 6.8 to 7.5 (29H)

### Synthesis Example (II-9) (Synthesis of Compound (II-9))

10.94 g (0. 450 mol) of a metal magnesium powder were suspended into 300 ml of distilled diethyl ether. Then, in an inert gas atmosphere, 54.44 g (0.450 mol) of allyl bromide were dropped to the suspension while a moderate boiling-point reflux state was maintained. The resultant was reacted for about 12 hours until magnesium was completely dissolved, to thereby yield a solution.

After cooling, 53.41 g of a target compound were obtained (92% yield) in the same manner as in Synthesis Example (II-1) except that the above solution was used for reaction instead of a mixed solution of diallylamine and triethylamine.

The measurements of the compound in the infrared absorption spectrum, TOF-Mass spectrum, and NMR resulted in the followings. Thus, the measurements identified the structure of Compound (II-9) described above.
Infrared absorption spectrum (cm⁻¹) : ν ring 1603, 1498, ν C=C 1630, ν P=O 1160 to 1250
TOF-Mass spectrum (M/Z) : 550, 551 (calculatedmolecularweight = 548.4963)
¹H-NMR spectrum (δ, ppm): CH₂= 4.6 to 4.7 (8H), =CH- 5.3 to 5.5 (4H), -CH₂- 2.7 (8H), aromatic C-H 6.8 to 7.5 (11H)

### Synthesis Example (II-10) (Synthesis of Compound (II-10))

An allyl magnesium bromide solution was prepared in an amount on a half scale as Synthesis Example (II-9).

After cooling, 58.95 g of a target compound were obtained (95% yield) in the same manner as in Synthesis Example (II-4) except that the above solution was used for reaction instead of a mixed solution of diallylamine and triethylamine.

The measurements of the compound in the infrared absorption spectrum, TOF-Mass spectrum, and NMR resulted in the followings. Thus, the measurements identified the structure of Compound (II-10) described above.
Infrared absorption spectrum (cm⁻¹): ν ring 1605, 1500, ν C=C 1630, ν P=O 1160 to 1250
TOF-Mass spectrum (M/Z) : 622, 623 (calculatedmolecularweight = 620.5623)
¹H-NMR spectrum (δ, ppm): CH₂= 4.5 to 4.6 (4H), =CH- 5.2 to 5.3 (2H), -CH₂- 2.9 (4H), aromatic C-H 6.8 to 7.5 (21H)

### Synthesis Example (II-11) (Synthesis of Compound (II-11))

A corresponding Grignard reagent was prepared in the same manner as in Synthesis Example (II-9) except that 82.37 g (0.450 mol) of *p*-bromostyrene were used instead of allyl bromide.

After cooling, 74.10 g of a target compound were obtained (93% yield) in the same manner as in Synthesis Example (II-1) except that the above solution was used for reaction instead of a mixed solution of diallylamine and triethylamine.

The measurements of the compound in the infrared absorption spectrum, TOF-Mass spectrum, and NMR resulted in the followings. Thus, the measurements identified the structure of Compound (II-11) described above.
Infrared absorption spectrum (cm⁻¹) : ν ring 1603, 1495, ν C=C 1635, ν P=O 1160 to 1250
TOF-Mass spectrum (M/Z): 798, 799 (calculated molecular weight = 796.7795)
¹H-NMR spectrum (δ, ppm): CH₂= 4.2 to 4.3 (8H), =CH- 5.0 to 5.2 (4H), aromatic C-H 6.8 to 7.5 (27H)

### Synthesis Example (II-12) (Synthesis of Compound (II-12))

A corresponding Grignard reagent was prepared in the same manner as in Synthesis Example (II-9) except that 68.68 g (0.450 mol) of *p*-chloromethylstyrene were used instead of allyl bromide.

After cooling, 78.47 g of a target compound were obtained (92% yield) in the same manner as in Synthesis Example (II-1) except that the above solution was used for reaction instead of a mixed solution of diallylamine and triethylamine.

The measurements of the compound in the infrared absorption spectrum, TOF-Mass spectrum, and NMR resulted in the followings. Thus, the measurements identified the structure of Compound (II-12) described above.
Infrared absorption spectrum (cm⁻¹) : ν ring 1605, 1498, v C=C 1630, ν P=O 1160 to 1250
TOF-Mass spectrum (M/Z): 854, 855 (calculated molecular weight = 852.8867)
¹H-NMR spectrum (5, ppm): CH₂= 4.2 to 4.3 (8H), =CH-5.0 to 5.2 (4H), -CH₂- 2.8 (8H), aromatic C-H 6.8 to 7.5 (27H)

### Synthesis Example (II-13) (Synthesis of Compound (II-13))

78.83 g of a target compound were obtained (92% yield) in the same manner as in Synthesis Example II-2 except that 71.50 g (0.600 mol) of *p*-aminostyrene were used instead of allylamine.

The measurements of the compound in the infrared absorption spectrum, TOF-Mass spectrum, and NMR resulted in the followings. Thus, the measurements identified the structure of Compound (II-13) described above.
Infrared absorption spectrum (cm⁻¹): ν NH 3255, ν ring 1605, 1500, ν C=C 1635, δ NH 1630, ν P=O 1160 to 1250
TOF-Mass spectrum (M/Z): 858, 859 (calculated molecular weight = 856.8391)
¹H-NMR spectrum (δ, ppm): CH₂= 4.3 to 4.4 (8H), =CH- 5.1 to 5.2 (4H), H-N< 3.3 to 3.5 (4H), aromatic C-H 6.8 to 7.4 (27H)

### Synthesis Example (II-14) (Synthesis of Compound (II-14))

97.64 g of a target compound were obtained (96% yield) in the same manner as in Synthesis Example (II-13) except that 95.54 g (0.600 mol) of N-allyl-p-aminostyrene were used instead of *p*-aminostyrene.

The measurements of the compound in the infrared absorption spectrum, TOF-Mass spectrum, and NMR resulted in the followings. Thus, the measurements identified the structure of Compound (II-14) described above.
Infrared absorption spectrum (cm⁻¹): ν ring 1605, 1500, ν C=C 1635, ν P=O 1160 to 1250
TOF-Mass spectrum (M/Z): 1019, 1020 (calculated molecular weight = 1017.0975)
¹H-NMR spectrum (δ, ppm) : CH₂= 4.3 to 4.4 and 4.8 to 5.0 (16H), =CH- 5.1 to 5.2 and 5.7 to 5.8 (8H), -CH₂- 3.0 to 3.1 (8H), aromatic C-H 6.8 to 7.4 (27H)

### Synthesis Example (II-15) (Synthesis of Compound (II-15))

84.16 g of a target compound were obtained (96% yield) in the same manner as in Synthesis Example (II-3) except that 69. 67 g (0.600 mol) of 2-hydroxyethylacrylate were used instead of allyl alcohol.

The measurements of the compound in the infrared absorption spectrum, TOF-Mass spectrum, and NMR resulted in the followings. Thus, the measurements identified the structure of Compound (II-15) described above.
Infrared absorption spectrum (cm⁻¹): ν C=O 1720, ν ring 1605, 1495, ν C=C 1630, ν P=O 1160 to 1250, ν P-O-C 1220, 1260
TOF-Mass spectrum (M/Z) : 846, 847 (calculatedmolecularweight = 844.6475)
¹H-NMR spectrum (δ, ppm): CH₂= 4.9 to 5.0 (8H), =CH- 5.8 to 5.9 (4H), -COOCH₂- 3.4 (8H), -CH₂O- 3.0 (8H), aromatic C-H 6.8 to 7.4 (11H)

### Synthesis Example (II-16) (Synthesis of Compound (II-16))

77.72 g of a target compound were obtained (92% yield) in the same manner as in Synthesis Example (II-2) except that 76.90 g (0.600 mol) of ethylenediamine monoacrylamide were used instead of allylamine.

The measurements of the compound in the infrared absorption spectrum, TOF-Mass spectrum, and NMR resulted in the followings. Thus, the measurements identified the structure of Compound (II-16) described above.
Infrared absorption spectrum (cm⁻¹) : ν NH 3260, amide-II 1655, ν ring 1605, 1495, ν C=C 1630, ν P=O 1160 to 1250, ν P-O-C 1220, 1260
TOF-Mass spectrum (M/Z) : 846, 847 (calculatedmolecularweight = 844.8299)
¹H-NMR spectrum (δ, ppm): CH₂= 4.8 to 5.0 (8H), -COOCH₂- 3.4 (8H), -CH₂O- 3.1 (8H), -CH₃ 1.8 (12H), aromatic C-H 6.8 to 7.4 (11H)

### Synthesis Example (II-17) (Synthesis of Compound (II-17))

80.05 g of a target compound were obtained (93% yield) in the same manner as in Synthesis Example (II-3) except that 72.09 g (0.600 mol) of *p*-hydroxystyrene were used instead of allyl alcohol.

The measurements of the compound in the infrared absorption spectrum, TOF-Mass spectrum, and NMR resulted in the followings. Thus, the measurements identified the structure of Compound (II-17) described above.
Infrared absorption spectrum (cm⁻¹): ν ring 1605, 1495, ν C=C 1630, ν P=O 1160 to 1250, ν P-O-C 1220, 1260
TOF-Mass spectrum (M/Z) : 862, 863 (calculatedmolecularweight = 860.7795)
¹H-NMR spectrum (δ, ppm): CH₂= 4.8 to 5.0 (8H), =CH- 5. 6 to 5.9 (4H), aromatic C-H 6.8 to 7.4 (27H)

### Synthesis Example (II-18) (Synthesis of Compound (II-18))

6.94 g (1.00 mol) of a metal lithium piece were suspended into 250 ml of distilled ether. While the suspension was vigorously stirred, a solution of 69.26 g (0.650 mol) of 2-chloroethylvinyl ether in 300 ml of distilled ether was dropped, and a moderate boiling state was maintained. After the dropping, the resultant was subjected to boiling-point reflux for 1 hour and cooled. After that, excessive metal lithium was removed by means of decantation.

62.85 g of a target compound were obtained (94% yield) in the same manner as in Synthesis Example (II-1) except that the entire amount of the organic lithium compound solution were used instead of a mixed solution of diallylamine and triethylamine.

The measurements of the compound in the infrared absorption spectrum, TOF-Mass spectrum, and NMR resulted in the followings. Thus, the measurements identified the structure of Compound (II-18) described above.
Infrared absorption spectrum (cm⁻¹): ν ring 1605, 1495, ν C=C 1635, ν P=O 1160 to 1250, ν P-O-C 1220, 1260
TOF-Mass spectrum (M/Z) : 670, 671 (calculatedmolecularweight = 668.6035)
¹H-NMR spectrum (δ, ppm): CH₂= 4.8 to 5.0 (8H), =CH- 5.5 to 5.7 (4H), -O-CH₂- 4.3 to 4.4 (8H), -CH₂-P- 3.8 to 3.9 (8H), aromatic C-H 6.8 to 7.4 (11H)

### [Production of resin products using reactive flame retardants represented by general formulae (I)]

### Example 1

57.3 parts by mass of 6, 6 nylon (manufacturedby UBE INDUSTRIES, LTD.: 2123B) as a thermoplastic resin, 25 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers, 0.5 part bymass of carbon black as a colorant, 0.2 part bymass of an antioxidant (manufactured by Ciba Geigy: Irganox 1010), 5 parts by mass of talc having a particle size of 2 µm as an inorganic filler, and 12 parts bymass of Compound (I-1) described above as a reactive f lame retardant were blended. The mixture was kneaded by means of a side-flow type biaxial extruder (manufactured by Japan Steel Works, LTD.) at 280°C to produce a resin pellet, and then the pellet was dried at 105°C for 4 hours. Afterthat, the pellet was molded by means of an injection molding machine (manufactured by FUNUC: α50C) under conditions including a resin temperature of 280°C and a die temperature of 80°C.

After that, the molded product was irradiated with 25 kGy of a γ ray from cobalt 60 as a radiation source to produce a resin product of Example 1.

### Example 2

58.2 parts bymass of 6, 6 nylon (manufacturedbyUBE INDUSTRIES, LTD.: 2020B) as a thermoplastic resin were added with 4 parts by mass of the above talc and 3 parts by mass of clay having a particle size on the nano-order (Nanomer 1.30 T, manufactured by NISSHOIWAI BENTONITE) as an inorganic filler, 0.5 part by mass of carbon black as a colorant, 8 parts by mass of Compound (I-4) and 6 parts by mass of Compound (I-5) described above as reactive flame retardants, and 0.3 part by mass of an antioxidant (manufactured by Ciba Geigy: Irganox 1010), and the whole was mixed.

Then, the above mixture was melted by means of a side-flow type biaxial extruder set at 280°C, and 20 parts by mass of glass fibers with their surfaces treated with a silane coupling agent each having a fiber length of about 3 mm (manufactured by Asahi Fiber-Glass Co. , Ltd. : 03.JAFT2Ak25) as reinforced fibers were mixed into the above mixture molten from a side through extrusion kneading to produce a compound pellet. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 25 kGy of a γ ray from cobalt 60 as a radiation source to produce a resin product of Example 2.

### Example 3

The same amounts of an inorganic filler, glass fibers, a colorant, and an antioxidant as those of Example 2 were added to produce a resin product of Example 3 except that 52.2 parts by mass of 6,6 nylon (manufactured by UBE INDUSTRIES, LTD.: 2020B) as a thermoplastic resin, 12 parts by mass of Compound (1-3) described above as a reactive flame retardant, and 8 parts by mass of a non-reactive organophosphorus-based flame retardant (manufactured by Sanko Chemical Co., Ltd.: HCA-HQ) were used.

### Example 4

54.7 parts bymass of 6, 6 nylon (manufactured by UBE INDUSTRIES, LTD.: 2020B) as a thermoplastic resin were added with 4 parts by mass of the clay having a particle size on the nano-order as an inorganic filler used in Example 2, 0.5 part by mass of carbon black as a colorant, 8 parts by mass of Compound (I-4) described above as a reactive flame retardant, 2. 5 parts by mass of a multifunctional cyclic compound (manufactured by Nippon Kasei Chemical Co., Ltd.: TAIC), 10 parts by mass of organophosphorus-based flame retardant (manufactured by Sanko Chemical Co., Ltd.: HCA-HQ), and 0.3 part by mass of an antioxidant (manufactured by Ciba Geigy: Irganox 1010), and the whole was mixed.

Then, the above mixture was melted by means of a side-flow type biaxial extruder set at 280°C, and 20 parts by mass of glass fibers with their surfaces treated with a silane coupling agent each having a fiber length of about 3 mm (manufactured by Asahi Fiber-Glass Co., Ltd. : 03.JAFT2Ak25) as reinforced fibers were mixed into the above mixture molten from a side through extrusion kneading to produce a compound pellet. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 25 kGy of a γ ray from cobalt 60 as a radiation source to produce a resin product of Example 4.

### Example 5

A molded product was produced under the same conditions as those of Example 2 except for the followings. 59.3 parts by mass of a polybutylene terephthalate resin (manufactured by Toray Industries, Inc.: TORAYCON 1401X06) as a thermoplastic resin, 12 parts by mass of Compound (I-2) described above as a reactive flame retardant, 5 parts by mass of a non-reactive organophosphorus-based flame retardant (manufactured by Sanko Chemical Co., Ltd. : HCA-HQ), 3 parts by mass of a multifunctional cyclic compound (manufactured by TOAGOSEI CO. , LTD. : M-315), 5 parts by mass of the clay of Example 2 having a particle size on the nano-order as an inorganic additive, 20 parts by mass of the glass fibers of Example 1 as a reinforcement component, 0.5 part by mass of carbon black as a colorant, and 0.2 part by mass of an antioxidant (manufactured by Ciba Geigy: Irganox 1010) were kneaded at a kneading temperature of 245°C to produce a resin compound pellet, and then the pellet was dried at 130°C for 3 hours. A cylinder temperature upon molding was changed to 250°C.

After that, the molded product was irradiated with an electron beam at an irradiation dose of 40 kGy at an accelerating voltage of 4.8 MeV by means of an accelerator manufactured by Sumitomo Heavy Industries, Ltd. to produce a resin product of Example 5.

### Example 6

A molded product was produced under the same conditions as those of Example 2 except that 2 parts by mass of a hot catalyst (manufactured by NOF CORPORATION: Nofmer BC) were additionally added to the system of Example 2.

After that, the molded product was reacted by heating at 245°C for 8 hours to produce a resin product of Example 6.

### Example 7

A molded product was produced under the same conditions as those of Example 4 except that 7 parts by mass of a UV initiator (Irganox 651 and Irganox 369 manufactured by Ciba Geigy were used in combination at a ratio of 2 : 1) were added to the system of Example 4.

After that, the molded product was irradiated with light with an illuminance of 150 mW/cm² at a wavelength of 365 nm by means of an ultra-high pressure mercury lamp for 2 minutes to produce a resin product of Example 7.

### Comparative Examples 1 to 7

Resin products of Comparative Examples 1 to 7 were produced in the same manners as in Examples 1 to 7, respectively, except that the reactive flame retardant of the present invention was not blended in Comparative Examples 1 to 7.

### Comparative Example 8

A resin product of Comparative Example 8 was produced under the same conditions as those of Example 4 except that only 20 parts by mass of a non-reactive organophosphorus-based flame retardant (manufactured by Sanko Chemical Co., Ltd.: EPOCLEAN) were added as the flame retardant of Example 4.

### [Production of resin products using reactive flame retardants represented by general formulae (II)]

### Example 8

57.2 parts bymass of 6,6 nylon (manufacturedby UBE INDUSTRIES, LTD.: 2123B) as a thermoplastic resin, 25 parts by mass of glass fibers with their surfaces treated with a silane coupling agent each having a fiber length of about 3 mm (manufactured by Asahi Fiber-Glass Co., Ltd.: 03.JAFT2Ak25) as reinforced fibers, 0.5 part by mass of carbon black as a colorant, 0.3 part bymass of an antioxidant (manufactured by Ciba Geigy: Irganox 1010), 5 parts by mass of talc having a particle size of 2 µm as an inorganic filler, and 12 parts by mass of Compound (II-1) described above as a reactive flame retardant were blended. The mixture was kneaded by means of a side-flow type biaxial extruder (manufactured by Japan Steel Works, LTD.) at 280°C to produce a resin pellet, and then the pellet was dried at 105°C for 4 hours. After that, the pellet was molded by means of an injection molding machine (manufactured by FUNUC: α50C) under conditions including a resin temperature of 280°C and a die temperature of 80°C.

After that, the molded product was irradiated with 25 kGy of a γ ray from cobalt 60 as a radiation source to produce a resin product of Example 8.

### Example 9

57.2 parts by mass of 6,6 nylon (manufactured by UBE INDUSTRIES, LTD.: 2020B) as a thermoplastic resin were added with 4 parts by mass of the above talc and 3 parts by mass of clay having a particle size on the nano-order (Nanomer 1.30 T, manufactured by NISSHOIWAI BENTONITE) as an inorganic filler, 0.5 part by mass of carbon black as a colorant, 10 parts by mass of Compound (II-9) and 5 parts by mass of Compound (II-5) described above as reactive flame retardants, and 0.3 part by mass of an antioxidant (manufactured by Ciba Geigy: Irganox 1010), and the whole was mixed.

Then, the above mixture was melted by means of a side-flow type biaxial extruder set at 280°C, and 20 parts by mass of glass fibers with their surfaces treated with a silane coupling agent each having a fiber length of about 3 mm (manufactured by Asahi Fiber-Glass Co. , Ltd. : 03. JAFT2Ak25) as reinforced fibers were mixed into the above mixture molten from a side through extrusion kneading to produce a compound pellet. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 25 kGy of a γ ray from cobalt 60 as a radiation source to produce a resin product of Example 9.

### Example 10

The same amounts of an inorganic filler, glass fibers, a colorant, and an antioxidant as those of Example 9 were added to produce a resin product of Example 10 except that 52.2 parts by mass of 6,6 nylon (manufactured by UBE INDUSTRIES, LTD.: 2020B) as a thermoplastic resin, 12 parts by mass of Compound (II-15) described above as a reactive flame retardant, and 8 parts by mass of a non-reactive organophosphorus-based flame retardant (manufactured by Sanko Chemical Co., Ltd.: HCA-HQ) were used.

### Example 11

53.2 parts by mass of 6, 6 nylon (manufacturedby UBE INDUSTRIES, LTD.: 2020B) as a thermoplastic resin were added with 4 parts by mass of the clay having a particle size on the nano-order as an inorganic filler used in Example 2, 0.5 part by mass of carbon black as a colorant, 10 parts by mass of Compound (II-18) described above as a reactive flame retardant, 2 parts by mass of a multifunctional cyclic compound (manufactured by Nippon Kasei Chemical Co., Ltd.: TAIC), 10 parts by mass of organophosphorus-based flame retardant (manufactured by Sanko Chemical Co., Ltd.: HCA-HQ), and 0.3 part by mass of an antioxidant (manufactured by Ciba Geigy: Irganox 1010), and the whole was mixed.

Then, the above mixture was melted by means of a side-flow type biaxial extruder set at 280°C, and 20 parts by mass of glass fibers with their surfaces treated with a silane coupling agent each having a fiber length of about 3 mm (manufactured by Asahi Fiber-Glass Co., Ltd. : 03.JAFT2Ak25) as reinforced fibers were mixed into the above mixture molten from a side through extrusion kneading to produce a compound pellet. After that, the pellet was dried at 105°C for 4 hours.

A molded product for use in electrical and electronic components and in automobiles was molded by means of an injection molding machine (manufactured by FUNUC: α50C) under general conditions including a cylinder temperature of 280°C, a die temperature of 80°C, an injection pressure of 78.4 MPa, an injection speed of 120 mm/s, and a cooling time of 15 seconds.

After that, the molded product was irradiated with 25 kGy of a γ ray from cobalt 60 as a radiation source to produce a resin product of Example 11.

### Example 12

A molded product was produced under the same conditions as those of Example 9 except for the followings. 53.3 parts by mass of a polybutylene terephthalate resin (manufactured by Toray Industries, Inc.: TORAYCON 1401X06) as a thermoplastic resin, 12 parts by mass of Compound (II-4) described above as a reactive flame retardant, 7 parts by mass of a non-reactive organophosphorus-based flame retardant (manufactured by Sanko Chemical Co., Ltd.: HCA-HQ), 3 parts by mass of a multifunctional cyclic compound (manufactured by TOAGOSEI CO. , LTD.: M-315), 4 parts by mass of the clay of Example 2 having a particle size on the nano-order as an inorganic additive, 20 parts by mass of the glass fibers of Example 10 as a reinforcement component, 0.5 part by mass of carbon black as a colorant, and 0.2 part by mass of an antioxidant (manufactured by Ciba Geigy: Irganox 1010) were kneaded at a kneading temperature of 245°C to produce a resin compound pellet, and then the pellet was dried at 130°C for 3 hours. A cylinder temperature upon molding was changed to 250°C.

After that, the molded product was irradiated with an electron beam at an irradiation dose of 40 kGy at an accelerating voltage of 4.8 MeV by means of an accelerator manufactured by Sumitomo Heavy Industries, Ltd. to produce a resin product of Example 12.

### Example 13

A molded product was produced under the same conditions as those of Example 9 except that 4 parts by mass of a hot catalyst (manufactured by NOF CORPORATION: Nofmer BC) were additionally added to the system of Example 9.

After that, the molded product was reacted by heating at 245°C for 8 hours to produce a resin product of Example 13.

### Example 14

A molded product was produced under the same conditions as those of Example 11 except that 7 parts by mass of a UV initiator (Irganox 651 and Irganox 369 manufactured by Ciba Geigy were used in combination at a ratio of 2 : 1) were added to the system of Example 11.

After that, the molded product was irradiated with light with an illuminance of 150 mW/cm² at a wavelength of 365 nm by means of an ultra-high pressure mercury lamp for 2 minutes to produce a resin product of Example 14.

### Comparative Examples 9 to 15

Resin products of Comparative Examples 9 to 15 were produced in the same manners as in Examples 8 to 14, respectively, except that the reactive flame retardant of the present invention was not blended in Comparative Examples 9 to 15.

### Comparative Example 16

A resin product of Comparative Example 16 was produced under the same conditions as those of Example 11 except that only 20 parts by mass of a non-reactive organophosphorus-based flame retardant (manufactured by Sanko Chemical Co., Ltd.: EPOCLEAN) were added as the flame retardant of Example 11.

### Test examples

For each of the resinproducts of Examples 1 to 14 and Comparative Examples 1 to 16, a test piece (measuring 5 inches long by 1/2 inch wide by 3.2 mm thick) in conformance with UL-94 as a flame retardancy test and a glow-wire test piece (60 mm square, having a thickness of 1.6 mm) in conformance with an IEC60695-2 method (GWFI) were created, and the test pieces were subj ected to a UL 94 test, a glow-wire test (in conformance with IEC), and a solder heat resistance test. In addition, all the resin products were subjected to a bleed out test at 300°C for 3 hours.

In the UL 94 test, a test piece was vertically mounted and in contact with the flame of a Bunsen burner for 10 seconds to record a burning time. After being extinguished, the test piece was in contact with the flame for 10 seconds again to record a burning time. The total of the burning times, a glowing time after the second extinguishment, and the presence or absence of a dropped product for igniting cotton were used for determination.

In addition, the glow-wire test was performed by using a nichrome wire of 4 mm in diameter (composed of 80% of nickel and 20% of chromium) as a glow-wire that is bent to prevent its tip from splitting and a type K (Chromel-Alumel) of 0.5 mm in diameter as a thermo couple for measurement of temperature at a thermocouple pressing load of 1.0 ± 0.2 N and a temperature of 850°C. The measurement, in which a burning time after contact for 30 seconds is 30 seconds or less and in which tissue paper below a sample fails to ignite, was used as determination criteria of combustibility (GWFI).

In the solder heat resistance test, a rate of change in dimensions after immersion in a bath of molten solder at 350°C for 10 seconds was shown.

Tables 1 and 2 collectively show the results.

**Table 1**

| | Flame retardancy (UL-94) | Kindler to reach clamp | Ignition of absorbent cotton due to dropped product | Glow-w ire test | Bleed out after 3 hours at 300°C | Rate of change in dimensions in solder heat resistance test (%) |
|---|---|---|---|---|---|---|
| Example 1 | V-0 | Absent | Absent | Passed | Absent | 6 |
| Example 2 | V-0 | Absent | Absent | Passed | Absent | 5 |
| Example 3 | V-0 | Absent | Absent | Passed | Absent | 10 |
| Example 4 | V-0 | Absent | Absent | Passed | Absent | 4 |
| Example 5 | V-0 | Absent | Absent | Passed | Absent | 10 |
| Example 6 | V-0 | Absent | Absent | Passed | Absent | 14 |
| Example 7 | V-0 | Absent | Absent | Passed | Absent | 18 |
| Comparative example 1 | HB | Present | Present | Failed | Absent | Deformed immediately after immersion |
| Comparative example 2 | HB | Present | Present | Failed | Absent | Deformed immediately after immersion |
| Comparative example 3 | HB | Present | Present | Failed | Absent | Deformed immediately after immersion |
| Comparative example 4 | HB | Present | Present | Failed | Absent | 28 |
| Comparative example 5 | HB | Present | Present | Failed | Absent | 32 |
| Comparative example 6 | HB | Present | Present | Failed | Absent | Deformed immediately after immersion |
| Comparative example 7 | HB | Present | Present | Failed | Absent | Deformed immediately after immersion |
| Comparative example 8 | V-2 | Absent | Present | Passed | Present | Deformed immediately after immersion |

**Table 2**

| | Flame retardancy (UL-94) | Kindler to reach clamp | Ignition of absorbent cotton due to dropped product | Glow-wire test | Bleed out after 3 hours at 300°C | Rate of change indimensions in solder heat resistance test (%) |
|---|---|---|---|---|---|---|
| Example 8 | V-0 | Absent | Absent | Passed | Absent | 7 |
| Example 9 | V-0 | Absent | Absent | Passed | Absent | 5 |
| Example 10 | V-0 | Absent | Absent | Passed | Absent | 10 |
| Example 11 | V-0 | Absent | Absent | Passed | Absent | 4 |
| Example 12 | V-0 | Absent | Absent | Passed | Absent | 10 |
| Example 13 | V-0 | Absent | Absent | Passed | Absent | 14 |
| Example 14 | V-0 | Absent | Absent | Passed | Absent | 18 |
| Comparative example 9 | HB | Present | Present | Failed | Absent | Deformed immediately after immersion |
| Comparative example 10 | HB | Present | Present | Failed | Absent | Deformed immediately after immersion |
| Comparative example 11 | HB | Present | Present | Failed | Absent | Deformed immediately after immersion |
| Comparative example 12 | HB | Present | Present | Failed | Absent | 28 |
| Comparative example 13 | HB | Present | Present | Failed | Absent | 32 |
| Comparative example 14 | HB | Present | Present | Failed | Absent | Deformed immediately after immersion |
| Comparative example 15 | HB | Present | Present | Failed | Absent | Deformed immediately after immersion |
| Comparative example 16 | V-2 | Absent | Present | Passed | Present | Deformed immediately after immersion |

As can be seen from the results shown in Tables 1 and 2, each of all the resin products of Examples had flame retardancy of V-0 (that is, each resin product was excellent in flame retardancy) and passed the glow-wire test. Furthermore, in each of all the resin products of Examples, a rate of change in dimensions after the solder heat resistance test was as small as 25% or less. In addition, a flame retardant was not observed to bleed out even after 3 hours at 300°C.

On the other hand, each of all the resin products of Comparative Examples 1 to 7 and 9 to 15 not containing any reactive flame retardant of the present invention had flame retardancy of HB (that is, insufficient flame retardancy) and failed the glow-wire test. Furthermore, those resin products are also inferior to those of the Examples for a rate of change in dimensions after the solder heat resistance test.

In addition, the resin products of Comparative Examples 8 and 16 each using a non-reactive organophosphorus-based flame retardant as a flame retardant had flame retardancy of V-2 (that is, insufficient flame retardancy), and were observed to bleed out after 3 hours at 300°C.

### INDUSTRIAL APPLICABILITY

The present invention can be suitably used as a non-halogen-based flame retardant and a non-halogen-based product made of flame-retarded resin each containing no halogen, and is capable of finding use in applications including: resin molded products such as an electrical component and an electronic component; sealing compounds for a semiconductor and the like; and coating films.

## Claims

1. A product made of flame-retarded resin obtained by solidifying a resin composition which contains a reactive flame retardant comprising an organic cyclic phosphorus compound having two or more unsaturated groups at an end thereof and represented by the following general formula (I) or (II) and a resin and then reacting the resin with the reactive flame retardant by heating or irradiation with a radiation, the product made of flame-retarded resin being **characterized in that** the resin is a thermoplastic resin, and the product comprises 1 to 20 mass% of the reactive flame retardant with respect to an entirety of the product made of flame-retarded resin; 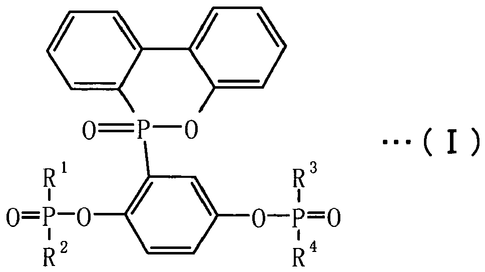 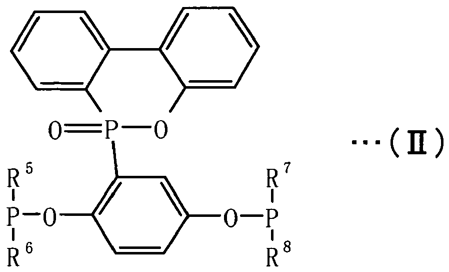 where, in the formula (I) or (II), R¹ to R⁴ and R⁵ to R⁸ are each selected from -NHCH₂CH=CH₂, -N(CH₂CH=CH₂)₂, -OCH₂CH=CH₂, -CH₂CH=CH₂, -CH₂CH₂OCH=CH₂, -(C₆H₄)-CH=CH₂, -O(C₆H₄)-CH=CH₂, -CH₂(C₆H₄)-CH=CH₂, -NH (C₆H₄)-CH=CH₂, -N(CH₂CH=CH₂)-(C₆H₄)-CH=CH₂, -O-R-OOC-C(R')=CH₂, -NH-R-NHCO-C(R')=CH₂, and an aryl group having 12 or less carbon atoms; R represents an alkylene group having 2 to 5 carbon atoms; and R' represents hydrogen or a methyl group; and at least two of R¹ to R⁴ and at least two of R⁵ to R⁸ each include a -CH=CH₂ group or a -C(CH₃)=CH₂ group.

2. A product made of flame-retarded resin according to claim 1, wherein the thermoplastic resin is a polyamide-based resin or a polybutylene terephthalate resin.

3. A product made of flame-retarded resin according to claim 1 or claim 2, wherein the resin composition contains two or more of the organic cyclic phosphorous compounds.

4. A product made of flame-retarded resin according to any one of claims 1 to 3, wherein:
the resin composition further contains a flame retardant other than the reactive flame retardant; and
the flame retardant other than the reactive flame retardant comprises a cyclic nitrogen-containing compound having at least one unsaturated group at an end thereof.

5. A product made of flame-retarded resin according to any one of claims 1 to 4, wherein:
the resin composition further contains a flame retardant other than the reactive flame retardant; and
the flame retardant other than the reactive flame retardant comprises an additive-type flame retardant having no reactivity.

6. A product made of flame-retarded resin according to any one of claims 1 to 5, wherein:
the resin composition further contains a crosslinking agent having no flame retardancy but having reactivity with the resin; and
the crosslinking agent comprises a multifunctional monomer or oligomer having an unsaturated group at an end of main skeleton thereof.

7. A flame-retarded resin product according to any one of claims 1 to 6, comprising 1 to 35 mass% of an inorganic filler with respect to the entirety of the flame-retarded resin product.

8. A product made of flame-retarded resin according to claim 7, which comprises, as the inorganic filler, 1 to 10 mass% of a laminar clay composed of laminating silicate layers with respect to the entirety of the product made of flame-retarded resin.

9. A product made of flame-retarded resin according to any one of claims 1 to 8, which comprises 5 to 40 mass% of reinforced fibers with respect to the entirety of the product made of flame-retarded resin.

10. A product made of flame-retarded resin according to any one of claims 1 to 9, which is obtained by a reaction between the resin and the reactive flame retardant through irradiation with an electron beam or γ ray at a dose of 10 kGy or more.

11. A product made of flame-retarded resin according to any one of claims 1 to 9, which is obtained by a reaction between the resin and the reactive flame retardant at a temperature higher than a temperature at which the resin composition is molded by 5°C or higher.

12. A product according to any one of claims 1 to 11, which is a molded product, a coating film, or a sealing compound.

13. A product according to any one of claims 1 to 12, which is an electrical component or an electronic component.

## Patentansprüche

1. Ein Produkt, das aus flammgeschütztem Harz hergestellt ist, erhalten durch Erstarren einer Harzzusammensetzung, die ein reaktives Flammschutzmittel, umfassend eine organische zyklische Phosphorverbindung, welche zwei oder mehr ungesättigte Reste an einem Ende davon aufweist und durch die nachstehende allgemeinen Formel (I) oder (II) dargestellt ist, und ein Harz enthält, und dann Umsetzen des Harzes mit dem reaktiven Flammschutzmittel durch Erwärmen oder Bestrahlen mit Strahlung, wobei das Produkt, das aus flammengeschütztem Harz hergestellt ist, **dadurch gekennzeichnet ist, dass** das Harz ein thermoplastisches Harz ist und das Produkt 1 bis 20 Masse-% des reaktiven Flammschutzmittels in Bezug auf die Gesamtheit des Produkts, das aus flammgeschütztem Harz hergestellt ist, umfasst; 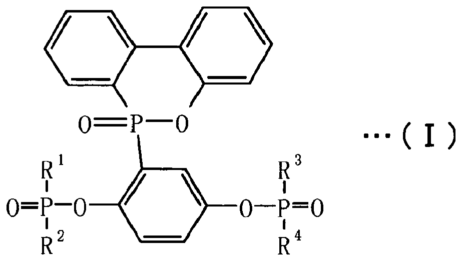 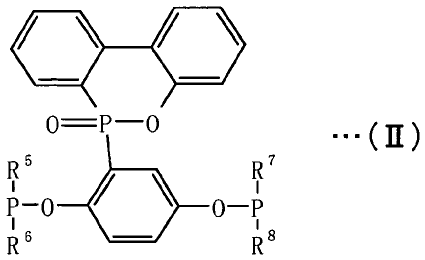 wobei in der Formel (I) oder (II) R¹ bis R⁴ und R⁵ bis R⁸ jeweils ausgewählt sind aus -NHCH₂CH=CH₂, -N(CH₂CH=CH₂)₂, -OCH₂CH=CH₂, -CH₂CH=CH₂, -CH₂CH₂OCH=CH₂, -(C₆H₄)-CH=CH₂, -O(C₆H₄)-CH=CH₂, -CH₂(C₆H₄)-CH=CH₂, -NH(C₆H₄)-CH=CH₂, -N(CH₂CH=CH₂)-(C₆H₄)-CH=CH₂, -O-R-OOC-C(R')=CH₂, -NH-R-NHCO-C(R')=CH₂ und der Arylrest 12 oder weniger Kohlenstoffatome aufweist; R einen Alkylenrest mit 2 bis 5 Kohlenstoffatomen darstellt; und R' Wasserstoff oder ein Methylgruppe darstellt; und mindestens zwei von R¹ bis R⁴ und mindestens zwei von R⁵ bis R⁸ jeweils eine -CH=CH₂ Gruppe oder eine -C(CH₃)=CH₂ Gruppe enthalten.

2. Ein Produkt, das aus flammgeschütztem Harz hergestellt ist, gemäß Anspruch 1, wobei das thermoplastische Harz ein Harz auf Polyamid-Basis oder ein Polybutylenterephthalatharz ist.

3. Ein Produkt, das aus flammgeschütztem Harz hergestellt ist, gemäß Anspruch 1 oder Anspruch 2, wobei die Harzzusammensetzung zwei oder mehrere der organischen zyklischen Phosphorverbindungen enthält.

4. Ein Produkt, das aus flammgeschütztem Harz hergestellt ist, gemäß einem der Ansprüche 1 bis 3, wobei:
die Harzzusammensetzung ferner ein Flammschutzmittel, das von dem reaktiven Flammschutzmittel verschieden ist, enthält; und
das Flammschutzmittel, das von dem reaktiven Flammschutzmittel verschieden ist, eine zyklische Stickstoff enthaltende Verbindung umfasst, welche mindestens einen ungesättigten Rest an einem Ende davon, aufweist.

5. Ein Produkt, das aus flammgeschütztem Harz hergestellt ist, gemäß einem der Ansprüche 1 bis 4, wobei:
die Harzzusammensetzung ferner ein Flammschutzmittel, das von dem reaktiven Flammschutzmittel verschieden ist, enthält; und
das Flammschutzmittel, das von dem reaktiven Flammschutzmittel verschieden ist, ein Flammschutzmittel vom Additiven-Typ, dass keine Reaktivität aufweist, umfasst.

6. Ein Produkt, das aus flammgeschütztem Harz hergestellt ist, gemäß einem der Ansprüche 1 bis 5, wobei:
die Harzzusammensetzung ferner ein Vernetzungsmittel, das keine flammhemmende Wirkung aufweist, jedoch eine Reaktivität mit dem Harz aufweist, enthält;
und
das Vernetzungsmittel ein mehrfach funktionelles Monomer oder Oligomer, welche ungesättigte Reste an einem Ende des Hauptgerüsts davon aufweisen, umfasst.

7. Ein flammgehemmtes Harzprodukt gemäß einem der Ansprüche 1 bis 6, umfassend 1 bis 35 Masse-% eines anorganischen Füllstoffs in Bezug auf die Gesamtheit des flammengeschützten Harzprodukts.

8. Ein Produkt, das aus flammgeschütztem Harz hergestellt ist, gemäß Anspruch 7, welches als anorganischen Füllstoff 1 bis 10 Masse-% eines geschichteten Tons, der aus geschichteten Silikatschichten aufgebaut ist, in Bezug auf die Gesamtheit des Produkts, das aus flammengeschütztem Harz hergestellt ist, umfasst.

9. Ein Produkt, das aus flammgeschütztem Harz hergestellt ist, gemäß einem der Ansprüche 1 bis 8, welches 5 bis 40 Masse-% an verstärkten Fasern in Bezug auf die Gesamtheit des Produkts, das aus flammengeschütztem Harz hergestellt ist, umfasst.

10. Ein Produkt, das aus flammgeschütztem Harz hergestellt ist, gemäß einem der Ansprüche 1 bis 9, welches durch eine Umsetzung zwischen dem Harz und dem reaktiven Flammschutzmittel durch Bestrahlen mit einem Elektronenstrahl oder γ-Strahlung mit einer Dosis von 10 kGy oder mehr erhalten wird.

11. Ein Produkt, das aus flammgeschütztem Harz hergestellt ist, gemäß einem der Ansprüche 1 bis 9, welches durch eine Umsetzung zwischen dem Harz und dem reaktiven Flammschutzmittel bei einer Temperatur, die höher als 5 °C oder mehr, als eine Temperatur bei der die Harzzusammensetzung geschmolzen wird, ist.

12. Ein Produkt gemäß einem der Ansprüche 1 bis 11, welches ein Formprodukt, eine Beschichtungsfolie oder eine Dichtmasse ist.

13. Ein Produkt gemäß einem der Ansprüche 1 bis 12, welches eine elektrische Komponente oder eine elektronische Komponente ist.

## Revendications

1. Produit en résine ignifugée obtenu par solidification d'une composition résineuse qui contient un ignifugeant réactif comprenant un composé organique cyclique phosphoré ayant au moins deux groupes insaturés à l'une de ses extrémités et représenté par la formule générale suivante (I) ou (II) et une résine, puis par réaction de la résine avec l'ignifugeant réactif par chauffage ou irradiation avec un rayonnement, le produit en résine ignifugée étant **caractérisé en ce que** la résine est une résine thermoplastique, et le produit comprend de 1 à 20 % en masse de l'ignifugeant réactif par rapport à une totalité du produit en résine ignifugée ; 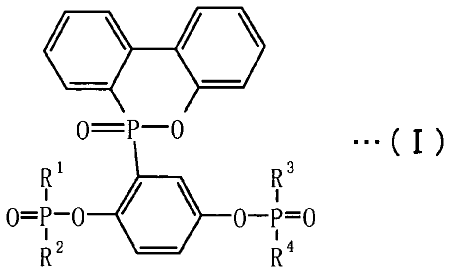 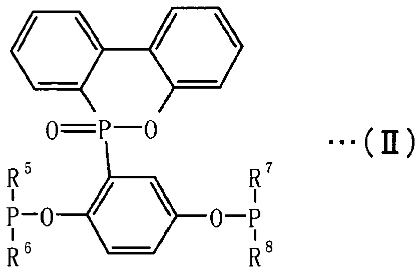 où, dans la formule (I) ou (II), R¹ à R⁴ et R⁵ à R⁸ sont chacun choisis parmi -NHCH₂CH=CH₂, -N(CH₂CH=CH₂)₂, -OCH₂CH=CH₂, -CH₂CH=CH₂, -CH₂CH₂OCH=CH₂, -(C₆H₄)-CH=CH₂, -O(C₆H₄)-CH=CH₂, -CH₂(C₆H₄)-CH=CH₂, -NH(C₆H₄)-CH=CH₂, -N(CH₂CH=CH₂)-(C₆H₄)-CH=CH₂, -O-R-OOC-C(R')=CH₂, -NH-R-NHCO-C(R')=CH₂, et un groupe aryle ayant 12 atomes de carbone ou moins ; R représente un groupe alkylène ayant 2 à 5 atomes de carbone ; et R' représente de l'hydrogène ou un groupe méthyle ; et au moins deux de R¹ à R⁴ et au moins deux de R⁵ à R⁸ comprennent chacun un groupe -CH=CH₂ ou un groupe -C(CH₃)=CH₂.

2. Produit en résine ignifugée selon la revendication 1, dans lequel la résine thermoplastique est une résine à base de polyamide ou une résine à base de polybutylène téréphtalate.

3. Produit en résine ignifugée selon la revendication 1 ou 2, dans lequel la composition résineuse contient au moins deux des composés organiques cycliques phosphorés.

4. Produit en résine ignifugée selon l'une quelconque des revendications 1 à 3, dans lequel :
la composition résineuse contient en outre un ignifugeant autre que l'ignifugeant réactif ; et
l'ignifugeant autre que l'ignifugeant réactif comprend un composé cyclique contenant de l'azote ayant au moins un groupe insaturé à l'une de ses extrémités.

5. Produit en résine ignifugée selon l'une quelconque des revendications 1 à 4, dans lequel :
la composition résineuse contient en outre un ignifugeant autre que l'ignifugeant réactif ; et
l'ignifugeant autre que l'ignifugeant réactif comprend un ignifugeant de type additif n'ayant aucune réactivité.

6. Produit en résine ignifugée selon l'une quelconque des revendications 1 à 5, dans lequel :
la composition résineuse contient en outre un agent de réticulation n'ayant pas de propriétés ignifuges mais ayant une réactivité vis-à-vis de la résine ; et
l'agent de réticulation comprend un monomère ou oligomère multifonctionnel ayant un groupe insaturé à l'une des extrémités de son squelette principal.

7. Produit en résine ignifugée selon l'une quelconque des revendications 1 à 6, comprenant 1 à 35 % en masse d'une charge inorganique par rapport à la totalité du produit en résine ignifugée.

8. Produit en résine ignifugée selon la revendication 7, qui comprend, comme charge inorganique, 1 à 10 % en masse d'une argile laminaire constituée de couches de silicate de stratification par rapport à la totalité du produit en résine ignifugée.

9. Produit en résine ignifugée selon l'une quelconque des revendications 1 à 8, qui comprend 5 à 40 % en masse de fibres renforcées par rapport à la totalité du produit en résine ignifugée.

10. Produit en résine ignifugée selon l'une quelconque des revendications 1 à 9, qui est obtenu par le biais d'une réaction entre la résine et l'ignifugeant réactif par irradiation avec un faisceau d'électrons ou un rayonnement γ à une dose de 10 kGy ou plus.

11. Produit en résine ignifugée selon l'une quelconque des revendications 1 à 9, qui est obtenu par le biais d'une réaction entre la résine et l'ignifugeant réactif à une température d'au moins 5 °C de plus qu'une température à laquelle la composition résineuse est moulée.

12. Produit selon l'une quelconque des revendications 1 à 11, qui est un produit moulé, un film de revêtement ou un composé d'étanchéité.

13. Produit selon l'une quelconque des revendications 1 à 12, qui est un composant électrique ou un composant électronique.
